# EUROPÄISCHE PATENTSCHRIFT

(11) **EP 3 908 874 B1**
(45) Veröffentlichungstag und Bekanntmachung des Hinweises auf die Patenterteilung: **13.03.2024**
(21) Anmeldenummer: 20702069.4
(22) Anmeldetag: 09.01.2020
(51) Int. Cl.: G02B 7/06, G02B 7/12, G02B 17/04, G02B 23/18, G02B 23/02, G02B 27/64

(54) **OPTISCHES SYSTEM ZUR ABBILDUNG EINES OBJEKTS SOWIE VERFAHREN ZUM BETRIEB DES OPTISCHEN SYSTEMS**
OPTICAL SYSTEM FOR IMAGING AN OBJECT, AND METHOD FOR OPERATING THE OPTICAL SYSTEM
SYSTÈME OPTIQUE POUR FORMER UNE IMAGE D'UN OBJET ET PROCÉDÉ PERMETTANT DE FAIRE FONCTIONNER LE SYSTÈME OPTIQUE

(30) Priorität: 11.01.2019 DE 102019200309
(43) Veröffentlichungstag der Anmeldung: 17.11.2021
(73) Patentinhaber: Carl Zeiss AG, 73447 Oberkochen (DE)
(72) Erfinder: TOBISCH, Alexander, 73479 Ellwangen (DE)
(74) Vertreter: Freischem & Partner Patentanwälte mbB
(86) Internationale Anmeldenummer: PCT/EP2020/050421
(87) Internationale Veröffentlichungsnummer: WO 2020/144274

(56) Entgegenhaltungen:
- WO-A2-2014/108428
- US-A- 3 582 180
- US-A- 3 944 324
- US-A1- 2016 131 922
- US-A1- 2018 364 495

## Beschreibung

Die Erfindung betrifft ein optisches System zur Abbildung eines Objekts, wobei das optische System ein Objektiv, eine Bildstabilisierungseinheit und eine Bildebene aufweist. Bei einer Ausführungsform der Erfindung ist beispielsweise das optische System mit einem Okular versehen. Ferner betrifft die Erfindung ein Verfahren zum Betrieb des optischen Systems.

Das oben bezeichnete optische System wird beispielsweise in einem Fernrohr oder in einem Fernglas eingesetzt. Das durch das Fernrohr oder das Fernglas von einem Beobachter erfasste Bild wird oft verwackelt wahrgenommen, da Zitterbewegungen oder Drehbewegungen der Hände des Benutzers, aber auch Bewegungen des Untergrundes wiederum Bewegungen des optischen Systems verursachen. Typische Frequenzen einer Zitterbewegung einer Hand liegen im Bereich von 0 Hz bis 20 Hz. Typische Amplituden einer Drehbewegung liegen im Bereich von 0° bis 8°. Um das Problem des Verwackelns zu lösen, ist es bekannt, Bilder in einem optischen System zu stabilisieren. Bekannte Lösungen verwenden Bildstabilisierungseinrichtungen zur Stabilisierung des Bildes mittels einer mechanischen Einrichtung und/oder einer elektronischen Einrichtung.

Aus der DE 23 53 101 C3 ist ein optisches System in Form eines Fernrohrs bekannt, das ein Objektiv, eine Bildstabilisierungseinheit in Form eines Prismenumkehrsystems sowie ein Okular aufweist. Das Prismenumkehrsystem ist kardanisch in einem Gehäuse des Fernrohrs gelagert. Hierunter wird verstanden, dass das Prismenumkehrsystem derart in dem Gehäuse des Fernrohrs angeordnet ist, dass das Prismenumkehrsystem um zwei zueinander rechtwinklig angeordnete Achsen drehbar gelagert ist. Zur drehbaren Lagerung wird in der Regel eine Vorrichtung verwendet, die als Kardanik bezeichnet wird. Ein Gelenkpunkt des kardanisch im Gehäuse gelagerten Prismenumkehrsystems ist mittig zwischen einer bildseitigen Hauptebene des Objektivs und einer objektseitigen Hauptebene des Okulars angeordnet. Das kardanisch gelagerte Prismenumkehrsystem wird aufgrund seiner Trägheit durch auftretende Drehzitterbewegungen nicht bewegt. Es bleibt somit fest im Raum stehen. Auf diese Weise wird eine Bildverwackelung, die aufgrund der Drehzitterbewegung des Gehäuses entsteht, kompensiert. Bei dieser rein mechanischen Bildstabilisierung kann es aber dazu kommen, dass keine Stabilisierung von Zitterbewegungen aller relevanten Frequenzen und/oder Amplituden erfolgt. Mit anderen Worten ausgedrückt, kann es durchaus sein, dass bei einigen bestimmten Zitterbewegungen oder Drehbewegungen keine Stabilisierung erfolgt.

Aus der DE 39 33 255 C2 ist ein binokulares Fernglas mit einer Bildstabilisierung bekannt, das ein Prismenumkehrsystem aufweist. Das Prismenumkehrsystem weist Porro-Prismen auf, die jeweils eine Kippachse aufweisen. Die Porro-Prismen sind um ihre jeweilige Kippachse schwenkbar ausgebildet. Zur Schwenkung der Porro-Prismen sind Motoren vorgesehen. Die Schwenkung erfolgt in Abhängigkeit einer Zitterbewegung, die ein Wackeln eines Bildes verursacht.

Aus der DE 20 2018 106 070 U1 ist eine Vorrichtung zur horizontalen und vertikalen Bildstabilisierung bei einem Fernrohr bekannt. Die Vorrichtung weist ein Bildumkehrsystem auf, das zwischen einem Objektiv und einem Okular angeordnet ist. Das Bildumkehrsystem besteht aus einem schräg im Abbildungsstrahlengang stehenden Planspiegel und einem Dachkantprisma. Der Planspiegel ist sowohl um eine Längsachse als auch um eine Querachse drehbar gelagert, wobei ein Schnittpunkt der Längsachse und der Querachse mit dem Auftreffpunkt der optischen Achse des Objektivs auf dem Planspiegel zusammenfällt.

Ein weiteres optisches System mit einer Bildstabilisierungseinheit ist aus der US 5,910,859 bekannt. Die Bildstabilisierungseinheit dieses optischen Systems ist in Form eines Umkehrsystems ausgebildet, das in einem optisch neutralen Punkt mittig zwischen einem Objektiv und einem Okular angeordnet ist. Unter einem optisch neutralen Punkt wird ein Punkt verstanden, um den das Objektiv und das Okular relativ im Raum gedreht werden können, ohne dass die Position eines Bildes eines Objekts sich verschiebt, wobei das Umkehrsystem fest im Raum stehen bleibt. Das Umkehrsystem ist um den optisch neutralen Punkt sowie um zwei Achsen, die senkrecht zur optischen Achse angeordnet sind, beweglich angeordnet. Wenn nun das Umkehrsystem auch bei einer Zitterbewegung stabil im Raum gehalten wird, dann wird auch das Bild eines Objekts bei Betrachtung des Objekts mittels dieses bekannten optischen Systems stabilisiert. Der optisch neutrale Punkt lässt sich auch wie folgt beschreiben. Unter einem optisch neutralen Punkt wird ein Punkt auf einer optischen Achse zwischen einem Objektiv und einem Okular verstanden, um den eine Bildstabilisierungseinheit drehbar angeordnet ist, so dass bei einer Drehzitterbewegung um einen beliebigen Punkt die Richtung des Bildes eines Objekts, welches durch das Objektiv und das Okular betrachtet wird, fest im Raum stehen bleibt, ebenso wie die Bildstabilisierungseinheit.

Überlegungen haben ergeben, dass die in der US 5,910,859 vorgeschlagene Position des Umkehrsystems ein relativ großes Umkehrsystem bedingt, um den Strahl nicht zu vignettieren. Somit ist ein Gehäuse, in dem das Umkehrsystem angeordnet ist, ebenfalls recht groß. Es weist die Form eines Kastens auf. Von vielen Benutzern wird der ästhetische Eindruck, den man von diesem Gerät in Backsteinform erhält, als nicht sehr schön bezeichnet. Ferner hat ein relativ großes Umkehrsystem zur Folge, dass das Trägheitsmoment des Umkehrsystems recht groß ist. Es sind daher relativ große Kräfte notwendig, um das Umkehrsystem zu bewegen. Um diese relativ großen Kräfte bereitzustellen, werden in der Regel Motoren mit einer hohen Leistung verwendet, die ihrerseits einen großen Bauraum benötigen. Derartige Motoren weisen ferner einen hohen Energieverbrauch auf, so dass dies zu verkürzten Laufzeiten von Batterien führt, welche in der Regel für die Energieversorgung der Motoren verwendet werden.

Ferner ist es bei einem aus dem Stand der Technik bekannten Fernglas bekannt, eine einzelne Bildstabilisierungseinheit gemeinsam sowohl für ein erstes optisches Teilsystem in einem ersten Tubus als auch für ein zweites optisches Teilsystem in einem zweiten Tubus zu verwenden. Baubedingt ist diese einzelne Bildstabilisierungseinheit mindestens so breit wie der Abstand des ersten Tubus zu dem zweiten Tubus. Ferner hat diese einzelne Bildstabilisierungseinheit ein hohes Gewicht. Wenn nun ein Motor zur Verstellung der einzelnen Bildstabilisierungseinheit verwendet wird, muss dieser wiederum leistungsstark sein, was wiederum zu den bereits erläuterten Problemen führt.

Ferner wird auf die US 3 582 180 A, die US 2016/0131922 A1, die WO 2014/108428 A2, die US 3 944 324 A sowie die US 2018/0364495 A1 verwiesen.

Der Erfindung liegt die Aufgabe zugrunde, ein optisches System zur Abbildung eines Objekts anzugeben, das eine Bildstabilisierungseinheit mit einem relativ geringen Trägheitsmoment aufweist, so dass im Vergleich zum Stand der Technik geringere Kräfte zur Verstellung der Bildstabilisierungseinheit und ein kleineres Gehäuse für das optische System verwendet werden können. Ferner soll ein Verfahren zum Betrieb des optischen Systems angegeben werden.

Erfindungsgemäß wird diese Aufgabe durch ein optisches System mit den Merkmalen des Anspruchs 1 gelöst. Ein erfindungsgemäßes Verfahren ist durch die Merkmale des Anspruchs 19 gegeben. Weitere Merkmale der Erfindung ergeben sich aus der nachfolgenden Beschreibung, den nachfolgenden Ansprüchen und/oder den beigefügten Zeichnungen.

Das erfindungsgemäße optische System zur Abbildung eines Objekts weist mindestens ein Objektiv, beispielsweise ein erstes Objektiv, mindestens eine Bildstabilisierungseinheit, beispielsweise eine erste Bildstabilisierungseinheit, sowie mindestens eine Bildebene, beispielsweise eine erste Bildebene, auf. Von dem Objektiv in Richtung der Bildebene gesehen sind zunächst das Objektiv, dann die Bildstabilisierungseinheit und dann die Bildebene entlang einer optischen Achse des optischen Systems, beispielsweise einer ersten optischen Achse, angeordnet. Mit anderen Worten ausgedrückt, ist die Bildstabilisierungseinheit zwischen dem Objektiv und der Bildebene angeordnet. Bei einer Ausführungsform ist es vorgesehen, dass das Objektiv zur Fokussierung ausgebildet ist und mindestens eine Einheit des Objektivs, beispielsweise entlang der optischen Achse, zur Fokussierung verschoben wird. Bei einer weiteren Ausführungsform ist es vorgesehen, dass das Objektiv mindestens eine Fronteinheit, beispielsweise eine erste Fronteinheit, und mindestens eine Fokussiereinheit, beispielsweise eine erste Fokussiereinheit, aufweist, wobei die Fokussiereinheit zur Fokussierung entlang der optischen Achse verschoben wird. Wiederum alternativ ist es vorgesehen, dass die Fokussierung durch ein Okular, beispielsweise ein erstes Okular, erfolgt, welches beispielsweise am optischen System vorgesehen ist und auf das weiter unten noch eingegangen wird.

Das erfindungsgemäße optische System ist beispielsweise als Monokular, Fernrohr, Fernglas, Teleskop und/oder Spektiv ausgebildet.

Die Bildstabilisierungseinheit weist mindestens eine erste optische Einheit und mindestens eine zweite optische Einheit auf. Die erste optische Einheit der Bildstabilisierungseinheit ist beispielsweise zwischen dem Objektiv und der zweiten optischen Einheit der Bildstabilisierungseinheit angeordnet. Ferner ist die erste optische Einheit der Bildstabilisierungseinheit um eine erste Drehachse drehbar ausgebildet. Es ist vorgesehen, dass die erste Drehachse die einzige Drehachse ist, um welche sich die erste optische Einheit der Bildstabilisierungseinheit dreht. Demnach ist es bei dieser Ausführungsform vorgesehen, dass die erste optische Einheit sich um keine weitere Drehachse dreht. Die zweite optische Einheit der Bildstabilisierungseinheit ist um eine zweite Drehachse drehbar ausgebildet. Insbesondere ist es vorgesehen, dass die zweite Drehachse die einzige Achse ist, um welche sich die zweite optische Einheit der Bildstabilisierungseinheit dreht. Demnach ist es bei dieser Ausführungsform vorgesehen, dass die zweite optische Einheit sich um keine weitere Drehachse als die zweite Drehachse dreht. Bei der Erfindung ist es vorgesehen, dass die erste Drehachse und die zweite Drehachse unterschiedliche Achsen sind. Mit anderen Worten ausgedrückt, sind die erste Drehachse und die zweite Drehachse nicht parallel. Da die erste Drehachse und die zweite Drehachse unterschiedliche Achsen sind, können die Drehung der ersten optischen Einheit der Bildstabilisierungseinheit um die erste Drehachse sowie die Drehung der zweiten optischen Einheit der Bildstabilisierungseinheit um die zweite Drehachse unabhängig voneinander erfolgen. Mit anderen Worten ausgedrückt, bedingt eine Drehung der ersten optischen Einheit der Bildstabilisierungseinheit um die erste Drehachse nicht zwingend eine Drehung der zweiten optischen Einheit der Bildstabilisierungseinheit um die zweite Drehachse. Vielmehr kann eine Drehung der ersten optischen Einheit der Bildstabilisierungseinheit um die erste Drehachse eine Drehung der zweiten optischen Einheit der Bildstabilisierungseinheit um die zweite Drehachse optional bewirken.

Ferner ist es bei dem erfindungsgemäßen optischen System vorgesehen, dass die zweite optische Einheit der Bildstabilisierungseinheit eine optische Dachkanteinheit, beispielsweise eine erste optische Dachkanteinheit ist. Die zweite optische Einheit der Bildstabilisierungseinheit ist als ein erstes Dachkantprisma ausgebildet.

Anders ausgedrückt, kann die zweite optische Einheit der Bildstabilisierungseinheit als geradsichtige optische Einheit ohne oder nur mit einem geringen Strahlversatz ausgebildet sein. Hinsichtlich der Ausbildung als erstes Dachkantprisma wird auch auf die Ausführungen weiter unten verwiesen.

Die Erfindung weist den Vorteil auf, dass die erste optische Einheit und die zweite optische Einheit ein geringes Gewicht aufweisen, so dass das Trägheitsmoment der ersten optischen Einheit und/oder der zweiten optischen Einheit im Vergleich zum Stand der Technik verringert ist. Daher können bei dem erfindungsgemäßen optischen System zur Verstellung der ersten optischen Einheit und/oder der zweiten optischen Einheit Motoren mit einer beispielsweise im Vergleich zum Stand der Technik relativ geringen Kraft verwendet werden. Derartige Motoren zeichnen sich dadurch aus, dass diese eine im Vergleich zum Stand der Technik geringere Leistung aufbringen müssen sowie einen geringeren Stromverbrauch aufweisen. Gleichzeitig ist es möglich, dass kleinere Bildstabilisierungseinheiten als im Stand der Technik verwendet werden können, ohne dass die Abbildungseigenschaften des erfindungsgemäßen optischen System sich verschlechtern. Somit kann auch ein kleineres Gehäuse für das erfindungsgemäße optische System als im Stand der Technik verwendet werden, so dass ein für viele Benutzer schöner ästhetischer Eindruck entsteht. Ferner ermöglicht es die Erfindung, dass für die Bewegung der ersten optischen Einheit und für die Bewegung der zweiten optischen Einheit verwendete Antriebseinheiten in einem Bereich im Gehäuse unterhalb der ersten optischen Einheit oder unterhalb der zweiten optischen Einheit angeordnet werden können, so dass die Antriebseinheiten in einen vorhandenen Bauraum integrierbar sind.

Wie oben bereits beschrieben, weist die Bildstabilisierungseinheit die erste optische Einheit und die zweite optische Einheit auf. Durch die Drehung der ersten optischen Einheit um die erste Drehachse wird eine Stabilisierung eines Bildes in einer ersten Richtung erzielt. Durch die Drehung der zweiten optischen Einheit um die zweite Drehachse erfolgt die Stabilisierung des Bildes in einer zweiten Richtung, welche beispielsweise senkrecht zu der ersten Richtung ausgerichtet ist. Hierauf wird weiter unten näher eingegangen.

Bei einer Ausführungsform des erfindungsgemäßen optischen Systems ist es zusätzlich oder alternativ vorgesehen, dass die zweite Drehachse, um welche die zweite optische Einheit der Bilderstabilisierungseinheit gedreht wird, in einem Winkel von 10° bis 89° zur optischen Achse ausgerichtet ist, wobei die Bereichsgrenzen in dem vorgenannten Bereich mit eingeschlossen sind. Insbesondere ist es vorgesehen, dass die zweite Drehachse in einem Winkel von 20° bis 80° oder in einem Winkel von 30° bis 70° oder in einem Winkel von 40° bis 60° zur optischen Achse ausgerichtet ist, wobei die Bereichsgrenzen mit in den vorgenannten Bereichen eingeschlossen sind. Bei einer weiteren Ausführungsform ist es beispielsweise vorgesehen, dass die zweite Drehachse in einem Winkel von 62,5° zur optischen Achse ausgerichtet ist. Es hat sich gezeigt, dass die vorgenannten Ausrichtungen der zweiten Drehachse zur optischen Achse keine oder nur eine geringe störende Bildfelddrehung verursacht. Somit eignen sich die vorgenannten Ausrichtungen besonders gut bei einer Bildstabilisierung.

Bei einer Ausführungsform des erfindungsgemäßen optischen Systems ist es zusätzlich oder alternativ vorgesehen, dass das erfindungsgemäße optische System eines der folgenden Merkmale aufweist:
- die erste optische Einheit der Bildstabilisierungseinheit ist zwischen dem Objektiv und der zweiten optischen Einheit der Bildstabilisierungseinheit angeordnet;
- die zweite optische Einheit der Bildstabilisierungseinheit ist zwischen dem Objektiv und der ersten optischen Einheit der Bildstabilisierungseinheit angeordnet.

Bei einer Ausführungsform des erfindungsgemäßen optischen Systems ist es zusätzlich oder alternativ vorgesehen, dass die erste optische Einheit der Bildstabilisierungseinheit mindestens einen Spiegel, beispielsweise einen ersten Spiegel, mindestens einen Planspiegel, beispielsweise einen ersten Planspiegel, und/oder mindestens ein Prisma, beispielsweise ein erstes Prisma, aufweist. Bei einer weiteren Ausführungsform des erfindungsgemäßen optischen Systems ist es zusätzlich oder alternativ vorgesehen, dass die erste optische Einheit der Bildstabilisierungseinheit eine einzelne Fläche aufweist, an welcher auf die Fläche einfallende Lichtstrahlen reflektiert werden. Beispielsweise ist es vorgesehen, dass die erste optische Einheit der Bildstabilisierungseinheit eine einzige Fläche aufweist, an welcher auf die Fläche einfallende Lichtstrahlen reflektiert werden.

Mit anderen Worten ausgedrückt, ist es bei dieser weiteren Ausführungsform vorgesehen, dass an der ersten optischen Einheit keine weitere Fläche angeordnet ist, an welcher einfallende Lichtstrahlen reflektiert werden.

Ferner ist es bei einer Ausführungsform des erfindungsgemäßen optischen System zusätzlich oder alternativ vorgesehen, dass die erste optische Einheit der Bildstabilisierungseinheit als ein Planspiegel, beispielsweise als ein erster Planspiegel, ausgebildet ist, wobei der Planspiegel eine Spiegelfläche, beispielsweise eine erste Spiegelfläche, aufweist. Ein Planspiegel ist ein auf einer Lichteinfallsseite verspiegelter Spiegel, dessen reflektierende Fläche plan ist, also näherungsweise einer ebenen Fläche entspricht.

Bei einer Ausführungsform des erfindungsgemäßen optischen Systems ist es zusätzlich oder alternativ vorgesehen, dass ein System, beispielsweise ein erstes System, gebildet aus der ersten optischen Einheit der ersten Bildstabilisierungseinheit sowie einer Halterung, beispielsweise einer ersten Halterung, für die erste optische Einheit einen Schwerpunkt, beispielsweise einen ersten Schwerpunkt, aufweist, wobei die erste Drehachse durch den Schwerpunkt verläuft. Der Schwerpunkt ist der Masseschwerpunkt des Systems. Bei einer weiteren Ausführungsform ist es zusätzlich oder alternativ vorgesehen, dass ein System gebildet aus der zweiten optischen Einheit der ersten Bildstabilisierungseinheit sowie einer Halterung für die zweite optische Einheit einen Schwerpunkt aufweist, wobei die zweite Drehachse durch den Schwerpunkt verläuft. Der Schwerpunkt ist der Masseschwerpunkt des Systems. Bei der vorgenannten Ausführungsform ist von Vorteil, dass die Bildstabilisierungseinheit im Grunde im Gleichgewicht gelagert ist. Somit ist ein geringeres Drehmoment im Vergleich zum Stand der Technik erforderlich, um die erste optische Einheit der Bildstabilisierungseinheit zu drehen, so dass mechanische Anforderungen an die Antriebseinheit zum Bewegen der ersten optischen Einheit gering sind und dass bei Einsatz einer elektrisch betriebenen Antriebseinheit im Vergleich zum Stand der Technik ein geringerer Stromverbrauch erzielt wird.

Bei einer weiteren Ausführungsform des erfindungsgemäßen optischen Systems ist es zusätzlich oder alternativ vorgesehen, dass die erste optische Achse eine erste Spiegeleinheit der ersten optischen Einheit der Bildstabilisierungseinheit an einem Schnittpunkt, beispielsweise einem ersten Schnittpunkt, schneidet, wobei die erste Drehachse durch den Schnittpunkt verläuft. Ein Auftreffpunkt der ersten optischen Achse liegt ein wenig oberhalb der Mitte einer Planfläche der ersten Spiegeleinheit. Die Spiegeleinheit der ersten optischen Einheit der Bildstabilisierungseinheit kann einen Mittelpunkt, beispielsweise einen ersten Mittelpunkt, aufweisen, wobei die erste Drehachse durch den Mittelpunkt verläuft. Die beiden zuletzt genannten Ausführungsformen werden beispielsweise gewählt, wenn eine besonders gute Abbildung mit dem optischen System erzielt werden soll.

Bei einer noch weiteren Ausführungsform des erfindungsgemäßen optischen Systems ist es zusätzlich oder alternativ vorgesehen, dass die erste Drehachse, um die sich die erste optische Einheit dreht, eine Ebene schneidet. Beispielsweise ist die Ebene eine erste Ebene. Ferner ist es bei dieser noch weiteren Ausführungsform vorgesehen, dass die zweite Drehachse, um die sich die zweite optische Einheit dreht, in der vorgenannten Ebene liegt. Beispielsweise ist es vorgesehen, dass die erste Drehachse entlang einer x-Achse eines Koordinatensystems ausgerichtet ist, wobei das Koordinatensystem durch die x-Achse, eine y-Achse und eine z-Achse gegeben ist. Die x-Achse, die y-Achse und die z-Achse sind senkrecht zueinander ausgerichtet und weisen einen gemeinsamen Schnittpunkt in Form eines Koordinatenursprungs auf. Die zweite Drehachse liegt dann in der Ebene, welche durch die y-Achse und die z-Achse aufgespannt wird. Dies ist die yz-Ebene. Beispielsweise erfolgt bei einer Drehung der ersten optischen Einheit um die erste Drehachse in Form der x-Achse eine Ablenkung von Lichtstrahlen im erfindungsgemäßen optischen System derart, dass eine Verschiebung des Bildes in der Bildebene entlang der y-Achse bewirkt wird. Hierdurch kann einer Verschiebung des mit dem erfindungsgemäßen optischen System erzeugten Bildes entlang der y-Achse entgegengewirkt werden. Es erfolgt demnach eine Stabilisierung entlang der y-Achse. Durch Drehung der zweiten optischen Einheit um die zweite Drehachse, welche in der vorgenannten Ebene liegt, kommt es zu einer Ablenkung von Lichtstrahlen im erfindungsgemäßen optischen System derart, dass eine Verschiebung des mit dem erfindungsgemäßen optischen System erzeugten Bildes in der Bildebene des erfindungsgemäßen optischen Systems entlang der x-Achse bewirkt wird. Es erfolgt demnach eine Stabilisierung des Bildes entlang der x-Achse.

Eine Drehung der zweiten optischen Einheit der Bildstabilisierungseinheit um eine beliebige Achse, beispielsweise eine beliebige Achse in der yz-Ebene, kann neben der oben genannten gewollten Verschiebung des Bildes entlang der x-Achse auch eine ungewollte Drehung des mit dem erfindungsgemäßen optischen System erzeugten Bildes bewirken. Um diese ungewollte Drehung zu vermeiden, ist es bei einer Ausführungsform des erfindungsgemäßen optischen Systems zusätzlich oder alternativ vorgesehen, dass die zweite Drehachse einer Achse entspricht, wobei bei einer Drehung der zweiten optischen Einheit um diese Achse keine ungewollte Drehung des Bildes bewirkt wird. Beispielsweise ist in einem unstabilisierten Zustand des erfindungsgemäßen optischen Systems die zweite Drehachse senkrecht zur Spiegelfläche oder zu einer Lichteinfallsfläche der ersten optischen Einheit der Bildstabilisierungseinheit ausgerichtet. Der unstabilisierte Zustand liegt dann vor, wenn keine Bildstabilisierung erfolgt. Bei dieser Ausführungsform kommt es ausschließlich zu einer Verschiebung des Bildes entlang der x-Achse. Demnach kommt es zu keiner störenden Drehung des Bildes. Bei einer weiteren Ausführungsform des erfindungsgemäßen optischen Systems ist es zusätzlich oder alternativ vorgesehen, dass die zweite Drehachse im unstabilisierten Zustand des erfindungsgemäßen optischen Systems in einem Winkel von 50° bis 130° oder von 60° bis 120° oder von 70° bis 110° oder von 80° bis 100° zur Spiegelfläche oder zu einer Lichteinfallsfläche der ersten optischen Einheit der Bildstabilisierungseinheit ausgerichtet ist, wobei die Bereichsgrenzen in den vorgenannten Bereichen eingeschlossen sind.

Bei einer weiteren Ausführungsform des erfindungsgemäßen optischen Systems ist es zusätzlich oder alternativ vorgesehen, dass das optische System eines der folgenden Merkmale aufweist:
- in der Bildebene ist eine Bilderfassungseinheit, beispielsweise eine erste Bilderfassungseinheit, angeordnet;
- in der Bildebene ist eine Bilderfassungseinheit, beispielsweise eine erste Bilderfassungseinheit, angeordnet, die insbesondere als ein Bildsensor, insbesondere ein Bildsensor auf Halbleiterbasis ausgebildet ist;
- das optische System weist mindestens ein Okular, beispielsweise ein erstes Okular, auf, wobei von dem Objektiv in Richtung der Bildebene gesehen zunächst die Bildebene und dann das Okular angeordnet sind. Die vorgenannte Ausführungsform weist somit vom Objektiv aus in Richtung der Bildebene gesehen die folgende Reihenfolge der einzelnen Einheiten auf: das Objektiv - die Bildstabilisierungseinheit - die Bildebene - das Okular.

Bei einer weiteren Ausführungsform ist es vorgesehen, dass die Bildebene des Objektivs und die Bildebene des Okulars zusammenfallen.

Bei einer noch weiteren Ausführungsform des erfindungsgemäßen optischen Systems ist es zusätzlich oder alternativ vorgesehen, dass das optische System ein Gehäuse, beispielsweise ein erstes Gehäuse, aufweist, wobei das Objektiv, die Bildstabilisierungseinheit und die Bildebene in diesem Gehäuse angeordnet sind. Zusätzlich oder alternativ ist es bei einer weiteren Ausführungsform des erfindungsgemäßen optischen Systems vorgesehen, dass das Okular in dem Gehäuse angeordnet ist.

Bei dem erfindungsgemäßen optischen System ist es vorgesehen, dass die Bildstabilisierungseinheit als ein Umkehrsystem, beispielsweise als ein erstes Umkehrsystem, ausgebildet ist. Es ist vorgesehen, dass die Bildstabilisierungseinheit als ein Prismenumkehrsystem, beispielsweise als ein erstes Prismenumkehrsystem ausgebildet ist. Das Prismenumkehrsystem weist beispielsweise mindestens ein Prisma auf.

Bei einer weiteren Ausführungsform des erfindungsgemäßen optischen Systems ist es zusätzlich oder alternativ vorgesehen, dass das optische System eines der folgenden Merkmale aufweist:
- mindestens eine Antriebseinheit, beispielsweise eine erste Antriebseinheit, zur Bewegung der ersten optischen Einheit und/oder der zweiten optischen Einheit der Bildstabilisierungseinheit;
- mindestens eine Antriebseinheit, beispielsweise eine erste Antriebseinheit, zur Bewegung der ersten optischen Einheit und/oder der zweiten optischen Einheit der Bildstabilisierungseinheit, wobei die Antriebseinheit mindestens eine Piezokeramik, beispielsweise eine erste Piezokeramik, aufweist;
- mindestens eine Antriebseinheit, beispielsweise eine erste Antriebseinheit, zur Bewegung der ersten optischen Einheit und/oder der zweiten optischen Einheit der Bildstabilisierungseinheit, wobei die Antriebseinheit mindestens einen Piezoaktor, beispielsweise einen ersten Piezoaktor, aufweist;
- mindestens eine Antriebseinheit, beispielsweise eine erste Antriebseinheit, zur Bewegung der ersten optischen Einheit und/oder der zweiten optischen Einheit der Bildstabilisierungseinheit, wobei die Antriebseinheit mindestens einen Piezo-Biegeaktor, beispielsweise einen ersten Piezo-Biegeaktor, aufweist;
- mindestens eine Antriebseinheit, beispielsweise eine erste Antriebseinheit, zur Bewegung der ersten optischen Einheit und/oder der zweiten optischen Einheit der Bildstabilisierungseinheit, wobei die Antriebseinheit mindestens einen Piezo-Ultraschallaktor, beispielsweise einen ersten Piezo-Ultraschallaktor, aufweist;
- mindestens eine Antriebseinheit, beispielsweise eine erste Antriebseinheit, zur Bewegung der ersten optischen Einheit und/oder der zweiten optischen Einheit der Bildstabilisierungseinheit, wobei die Antriebseinheit mindestens einen Piezo-Wanderwellenaktor, beispielsweise einen ersten Piezo-Wanderwellenaktor, aufweist;
- mindestens eine Antriebseinheit, beispielsweise eine erste Antriebseinheit, zur Bewegung der ersten optischen Einheit und/oder der zweiten optischen Einheit der Bildstabilisierungseinheit, wobei die Antriebseinheit mindestens einen Motor, beispielsweise einen ersten Motor, aufweist. Beispielsweise ist der Motor als Gleichstrom-Motor, als Schrittmotor oder als Schwingspulenmotor ausgebildet;
- mindestens eine Antriebseinheit, beispielsweise eine erste Antriebseinheit, zur Bewegung der ersten optischen Einheit und/oder der zweiten optischen Einheit der Bildstabilisierungseinheit sowie mindestens eine Steuerund/oder Regeleinheit zur Steuerung/Regelung der Antriebseinheit.

Überlegungen haben ergeben, dass die Ausbildung mindestens einer der vorgenannten Antriebseinheiten als eine Antriebseinheit basierend auf der Piezo-Technik besonders von Vorteil ist. Derartige Antriebseinheiten weisen einen geringen Stromverbrauch auf. Ferner weisen derartige Antriebseinheiten bei einer Abschaltung einer Steuerspannung eine derart ausreichend große Haltekraft auf, dass eine beweglich angeordnete Bildstabilisierungseinheit nicht noch zusätzlich arretiert werden muss. Eine Festsetzung einer beweglichen Bildstabilisierungseinheit ist wünschenswert, wenn das optische System nicht benutzt wird, um Schäden an der Bildstabilisierungseinheit zu vermeiden und/oder um das optische System (beispielsweise ein Fernglas) auch bei einer ausgeschalteten Stabilisierungsfunktion weiterhin als Fernglas benutzen zu können. Ein weiterer Vorteil derartiger Antriebseinheiten ist, dass die Bewegung derartiger Antriebseinheiten aufgrund der direkten Abhängigkeit von einer zugeführten Steuerspannung sehr genau ist. Demnach können Bewegungen der vorgenannten beweglichen Bildstabilisierungseinheiten recht genau gesteuert werden. Die vorgenannten Antriebseinheiten stellen eine relativ geringe Antriebskraft zur Verfügung, die für die Verstellung von Bildstabilisierungseinheiten nach dem Stand der Technik nicht unbedingt ausreicht.

Bei einer noch weiteren Ausführungsform des erfindungsgemäßen optischen Systems ist es zusätzlich oder alternativ vorgesehen, dass das optische System mindestens einen Bewegungsdetektor, beispielsweise einen ersten Bewegungsdetektor, zur Ermittlung einer Bewegung des optischen Systems, beispielsweise einer rotatorischen und/oder einer translatorischen Zitterbewegung, aufweist. Der erste Bewegungsdetektor ist beispielsweise als Drehratensensor, als Gyroskop-Sensor oder als Magnetometer ausgebildet. Es wird explizit darauf hingewiesen, dass die Erfindung auf die Verwendung der vorgenannten Bewegungsdetektoren nicht eingeschränkt ist. Vielmehr kann jeglicher Bewegungsdetektor verwendet werden, der für die Erfindung geeignet ist.

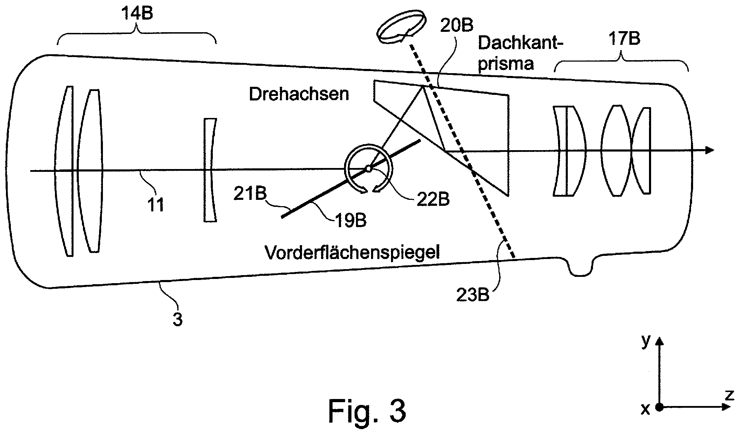

Bei einer Ausführungsform des erfindungsgemäßen optischen Systems ist es zusätzlich oder alternativ vorgesehen, dass die zweite optische Einheit der Bildstabilisierungseinheit als ein Spiegelsystem, nämlich als ein erstes Prisma, ausgebildet ist. Beispielsweise ist das Spiegelsystem als eine Einrichtung mit einer reflektierenden Fläche als das erste Prisma ausgebildet. Es ist vorgesehen, dass die zweite optische Einheit der Bildstabilisierungseinheit als ein Dachkantprisma, beispielsweise als ein erstes Dachkantprisma, ausgebildet ist. Insbesondere ist das vorgenannte erste Dachkantprisma als ein Bauerfeind-Prisma mit einer Dachkante ausgebildet. Bei einer weiteren Ausführungsform ist es zusätzlich oder alternativ vorgesehen, dass die Dachkante des ersten Dachkantprismas wie eine Dachkante eines Amici-Prismas ausgebildet ist. Bei einer noch weiteren Ausführungsform ist es zusätzlich oder alternativ vorgesehen, dass in das erste Dachkantprisma einfallende Lichtstrahlen innerhalb des ersten Dachkantprismas drei Mal reflektiert werden, nämlich zunächst an einer ersten Fläche der Dachkante des ersten Dachkantprismas, dann an einer zweiten Fläche der Dachkante des ersten Dachkantprismas und anschließend an einer dritten Fläche des ersten Dachkantprismas. Das Vorbeschriebene ist in der noch weiter unten erläuterten **Figur 3** dargestellt. In der **Figur 3** sind aufgrund einer zweidimensionalen Ansicht nur zwei von drei Reflexionen zu sehen, da zwei Reflexionen an der Dachkante überlappen und daher als eine Reflexion sichtbar sind.

Wenn das erfindungsgemäße optische System mehrere optische Kanäle oder mehrere optische Teilsysteme aufweist, so ist es bei einer weiteren Ausführungsform des erfindungsgemäßen optischen Systems vorgesehen, dass das erfindungsgemäße optische System mindestens ein zweites Objektiv, mindestens eine zweite Bildstabilisierungseinheit sowie mindestens eine zweite Bildebene aufweist. Von dem zweiten Objektiv in Richtung der zweiten Bildebene gesehen sind zunächst das zweite Objektiv, dann die zweite Bildstabilisierungseinheit und dann die zweite Bildebene entlang einer zweiten optischen Achse des optischen Systems angeordnet. Mit anderen Worten ausgedrückt, ist die zweite Bildstabilisierungseinheit zwischen dem zweiten Objektiv und der zweiten Bildebene angeordnet. Bei einer Ausführungsform ist es vorgesehen, dass das zweite Objektiv zur Fokussierung ausgebildet ist und mindestens eine Einheit des zweiten Objektivs, beispielsweise entlang der zweiten optischen Achse, zur Fokussierung verschoben wird. Bei einer weiteren Ausführungsform ist es vorgesehen, dass das zweite Objektiv mindestens eine zweite Fronteinheit und mindestens eine zweite Fokussiereinheit aufweist, wobei die zweite Fokussiereinheit zur Fokussierung entlang der zweiten optischen Achse verschoben wird. Wiederum alternativ ist es vorgesehen, dass die Fokussierung durch ein zweites Okular erfolgt, welches beispielsweise am optischen System vorgesehen ist und auf das weiter unten noch eingegangen wird.

Die zweite Bildstabilisierungseinheit weist mindestens eine dritte optische Einheit und mindestens eine vierte optische Einheit auf. Im Grunde ist die dritte optische Einheit eine erste optische Einheit der zweiten Bildstabilisierungseinheit, und die vierte optische Einheit ist eine zweite optische Einheit der zweiten Bildstabilisierungseinheit. Die dritte optische Einheit der zweiten Bildstabilisierungseinheit ist beispielsweise zwischen dem zweiten Objektiv und der vierten optischen Einheit der zweiten Bildstabilisierungseinheit angeordnet. Ferner ist die dritte optische Einheit der zweiten Bildstabilisierungseinheit um eine dritte Drehachse drehbar ausgebildet. Es ist vorgesehen, dass die dritte Drehachse die einzige Drehachse ist, um welche sich die dritte optische Einheit der zweiten Bildstabilisierungseinheit dreht. Demnach ist es bei dieser Ausführungsform vorgesehen, dass die dritte optische Einheit sich um keine weitere Drehachse dreht. Insbesondere ist es vorgesehen, dass die dritte Drehachse die einzige Achse ist, um welche sich die dritte optische Einheit der zweiten Bildstabilisierungseinheit dreht. Demnach ist es bei dieser Ausführungsform vorgesehen, dass die dritte optische Einheit sich um keine weitere Drehachse als die dritte Drehachse dreht. Die vierte optische Einheit der zweiten Bildstabilisierungseinheit ist um eine vierte Drehachse drehbar ausgebildet. Beispielsweise ist es bei einer Ausführungsform der Erfindung vorgesehen, dass die dritte Drehachse und die vierte Drehachse unterschiedliche Achsen sind. Mit anderen Worten ausgedrückt, sind die dritte Drehachse und die vierte Drehachse nicht parallel. Da bei dieser Ausführungsform die dritte Drehachse und die vierte Drehachse unterschiedliche Achsen sind, können bei dieser Ausführungsform die Drehung der dritten optischen Einheit der zweiten Bildstabilisierungseinheit um die dritte Drehachse sowie die Drehung der vierten optischen Einheit der zweiten Bildstabilisierungseinheit um die vierte Drehachse unabhängig voneinander erfolgen. Mit anderen Worten ausgedrückt, bedingt eine Drehung der dritten optischen Einheit der zweiten Bildstabilisierungseinheit um die dritte Drehachse nicht zwingend eine Drehung der vierten optischen Einheit der zweiten Bildstabilisierungseinheit um die vierte Drehachse. Vielmehr kann eine Drehung der dritten optischen Einheit der zweiten Bildstabilisierungseinheit um die dritte Drehachse eine Drehung der vierten optischen Einheit der zweiten Bildstabilisierungseinheit um die vierte Drehachse optional bewirken.

Ferner ist es bei dem erfindungsgemäßen optischen System vorgesehen, dass die vierte optische Einheit der zweiten Bildstabilisierungseinheit eine zweite optische Dachkanteinheit ist. Beispielweise ist die vierte optische Einheit der zweiten Bildstabilisierungseinheit als zweites Spiegelsystem und/oder als zweites Dachkantprisma ausgebildet. Anders ausgedrückt, kann die vierte optische Einheit der zweiten Bildstabilisierungseinheit als geradsichtige optische Einheit ohne oder nur mit einem geringen Strahlversatz ausgebildet sein. Hinsichtlich der Ausbildung als zweites Dachkantprisma wird auch auf die Ausführungen weiter oben und weiter unten verwiesen, die auch hier analog gelten.

Wie oben bereits beschrieben, weist die zweite Bildstabilisierungseinheit die dritte optische Einheit und die vierte optische Einheit auf. Durch die Drehung der dritten optischen Einheit um die dritte Drehachse wird eine Stabilisierung eines mit dem erfindungsgemäßen optischen System erzeugten Bildes in einer ersten Richtung erzielt. Durch die Drehung der vierten optischen Einheit um die vierte Drehachse erfolgt die Stabilisierung eines mit dem erfindungsgemäßen optischen System erzeugten Bildes in einer zweiten Richtung, welche beispielsweise senkrecht zu der ersten Richtung ausgerichtet ist. Hierauf wird weiter unten näher eingegangen.

Bei einer Ausführungsform des erfindungsgemäßen optischen Systems ist es zusätzlich oder alternativ vorgesehen, dass die vierte Drehachse, um welche die vierte optische Einheit der zweiten Bilderstabilisierungseinheit gedreht wird, in einem Winkel von 10° bis 89° zur zweiten optischen Achse ausgerichtet ist, wobei die Bereichsgrenzen in dem vorgenannten Bereich mit eingeschlossen sind. Insbesondere ist es vorgesehen, dass die vierte Drehachse in einem Winkel von 20° bis 80° oder in einem Winkel von 30° bis 70° oder in einem Winkel von 40° bis 60° zur zweiten optischen Achse ausgerichtet ist, wobei die Bereichsgrenzen in den vorgenannten Bereichen eingeschlossen sind. Bei einer weiteren Ausführungsform ist es beispielsweise vorgesehen, dass die vierte Drehachse in einem Winkel von 62,5° zur zweiten optischen Achse ausgerichtet ist. Es hat sich gezeigt, dass die vorgenannten Ausrichtungen der vierten Drehachse zur zweiten optischen Achse keine oder nur eine geringe störende Bildfelddrehung verursacht. Somit eignen sich die vorgenannten Ausrichtungen besonders gut bei einer Bildstabilisierung.

Bei einer Ausführungsform des erfindungsgemäßen optischen Systems ist es zusätzlich oder alternativ vorgesehen, dass das erfindungsgemäße optische System eines der folgenden Merkmale aufweist:
- die dritte optische Einheit der zweiten Bildstabilisierungseinheit ist zwischen dem zweiten Objektiv und der vierten optischen Einheit der zweiten Bildstabilisierungseinheit angeordnet;
- die vierte optische Einheit der zweiten Bildstabilisierungseinheit ist zwischen dem zweiten Objektiv und der dritten optischen Einheit der zweiten Bildstabilisierungseinheit angeordnet.

Bei einer Ausführungsform des erfindungsgemäßen optischen Systems ist es zusätzlich oder alternativ vorgesehen, dass die dritte optische Einheit der zweiten Bildstabilisierungseinheit mindestens einen zweiten Spiegel, mindestens einen zweiten Planspiegel und/oder mindestens ein zweites Prisma aufweist.

Ferner ist es bei dem erfindungsgemäßen optischen System zusätzlich oder alternativ vorgesehen, dass die dritte optische Einheit der zweiten Bildstabilisierungseinheit als ein zweiter Planspiegel ausgebildet ist, wobei der zweite Planspiegel eine zweite Spiegelfläche aufweist.

Bei einer weiteren Ausführungsform des erfindungsgemäßen optischen Systems ist es zusätzlich oder alternativ vorgesehen, dass die dritte optische Einheit der zweiten Bildstabilisierungseinheit eine einzelne Fläche aufweist, an welcher auf die Fläche einfallende Lichtstrahlen reflektiert werden. Beispielsweise ist es vorgesehen, dass die dritte optische Einheit der zweiten Bildstabilisierungseinheit eine einzige Fläche aufweist, an welcher auf die Fläche einfallende Lichtstrahlen reflektiert werden. Mit anderen Worten ausgedrückt, ist es bei dieser weiteren Ausführungsform vorgesehen, dass an der dritten optischen Einheit keine weitere Fläche angeordnet ist, an welcher einfallende Lichtstrahlen reflektiert werden.

Bei einer Ausführungsform des erfindungsgemäßen optischen Systems ist es zusätzlich oder alternativ vorgesehen, dass ein zweites System gebildet aus der dritten optischen Einheit der zweiten Bildstabilisierungseinheit sowie einer zweiten Halterung für die dritte optische Einheit einen zweiten Schwerpunkt aufweist, wobei die dritte Drehachse durch den zweiten Schwerpunkt verläuft. Der zweite Schwerpunkt ist der Masseschwerpunkt des zweiten Systems. Bei einer Ausführungsform des erfindungsgemäßen optischen Systems ist es zusätzlich oder alternativ vorgesehen, dass ein System gebildet aus der vierten optischen Einheit der zweiten Bildstabilisierungseinheit sowie einer Halterung für die vierte optische Einheit einen Schwerpunkt aufweist, wobei die vierte Drehachse durch den Schwerpunkt verläuft. Der Schwerpunkt ist der Masseschwerpunkt des Systems. Bei der vorgenannten Ausführungsform ist von Vorteil, dass die zweite Bildstabilisierungseinheit im Grunde im Gleichgewicht gelagert ist. Somit ist ein geringeres Drehmoment als im Stand der Technik erforderlich, um die dritte optische Einheit der zweiten Bildstabilisierungseinheit zu drehen, so dass mechanische Anforderungen an eine Antriebseinheit zum Bewegen der dritten optischen Einheit gering sind und dass bei Einsatz einer elektrisch betriebenen Antriebseinheit im Vergleich zum Stand der Technik ein geringerer Stromverbrauch erzielt wird.

Bei einer weiteren Ausführungsform des erfindungsgemäßen optischen Systems ist es zusätzlich oder alternativ vorgesehen, dass die zweite optische Achse eine zweite Spiegeleinheit der dritten optischen Einheit der zweiten Bildstabilisierungseinheit an einem zweiten Schnittpunkt schneidet, wobei die dritte Drehachse durch den zweiten Schnittpunkt verläuft. Ein Auftreffpunkt der zweiten optischen Achse liegt ein wenig oberhalb der Mitte einer Planfläche der zweiten Spiegeleinheit. Die zweite Spiegeleinheit der dritten optischen Einheit der zweiten Bildstabilisierungseinheit weist einen zweiten Mittelpunkt auf, wobei die dritte Drehachse durch den zweiten Mittelpunkt verläuft. Die beiden zuletzt genannten Ausführungsformen werden beispielsweise gewählt, wenn eine besonders gute Abbildung mit dem optischen System erzielt werden soll.

Bei einer noch weiteren Ausführungsform des erfindungsgemäßen optischen Systems ist es zusätzlich oder alternativ vorgesehen, dass die dritte Drehachse, um die sich die dritte optische Einheit dreht, eine zweite Ebene schneidet. Ferner ist es bei dieser noch weiteren Ausführungsform vorgesehen, dass die vierte Drehachse, um die sich die vierte optische Einheit dreht, in der vorgenannten zweiten Ebene liegt. Beispielsweise ist es vorgesehen, dass die dritte Drehachse entlang der x-Achse des Koordinatensystems ausgerichtet ist. Die vierte Drehachse liegt dann in der Ebene, welche durch die y-Achse und die z-Achse aufgespannt wird. Dies ist die yz-Ebene. Beispielsweise erfolgt bei einer Drehung der dritten optischen Einheit um die dritte Drehachse in Form der x-Achse eine Ablenkung von Lichtstrahlen im erfindungsgemäßen optischen System derart, dass eine Verschiebung des Bildes entlang der y-Achse bewirkt wird. Hierdurch kann einer Verschiebung des mit dem erfindungsgemäßen optischen System erzeugten Bildes in der Bildebene entlang der y-Achse entgegengewirkt werden. Es erfolgt demnach eine Stabilisierung des Bildes entlang der y-Achse. Durch Drehung der vierten optischen Einheit um die vierte Drehachse, welche in der vorgenannten Ebene liegt, kommt es zu einer Ablenkung von Lichtstrahlen im erfindungsgemäßen optischen System derart, dass eine Verschiebung des mit dem erfindungsgemäßen optischen System erzeugten Bildes in der Bildebene des erfindungsgemäßen optischen Systems entlang der x-Achse bewirkt wird. Es erfolgt demnach eine Stabilisierung des Bildes entlang der x-Achse.

Eine Drehung der vierten optischen Einheit der zweiten Bildstabilisierungseinheit um eine beliebige Achse, beispielsweise eine beliebige Achse in der yz-Ebene, kann neben der oben genannten gewollten Verschiebung des Bildes entlang der x-Achse auch eine ungewollte Drehung des mit dem erfindungsgemäßen optischen System erzeugten Bildes bewirken. Um diese ungewollte Drehung zu vermeiden, ist es bei einer Ausführungsform des erfindungsgemäßen optischen Systems zusätzlich oder alternativ vorgesehen, dass die vierte Drehachse einer Achse entspricht, wobei bei einer Drehung der vierten optischen Einheit um diese Achse keine ungewollte Drehung des Bildes bewirkt wird. Beispielsweise ist in einem unstabilisierten Zustand des erfindungsgemäßen optischen Systems die vierte Drehachse senkrecht zur zweiten Spiegelfläche oder zu einer Lichteinfallsfläche der dritten optischen Einheit der zweiten Bildstabilisierungseinheit ausgerichtet. Der unstabilisierte Zustand liegt dann vor, wenn keine Bildstabilisierung erfolgt. Bei dieser Ausführungsform kommt es ausschließlich zu einer Verschiebung des Bildes entlang der x-Achse. Demnach kommt es zu keiner störenden Drehung des Bildes. Bei einer weiteren Ausführungsform des erfindungsgemäßen optischen Systems ist es zusätzlich oder alternativ vorgesehen, dass die vierte Drehachse im unstabilisierten Zustand des erfindungsgemäßen optischen Systems in einem Winkel von 50° bis 130° oder von 60° bis 120° oder von 70° bis 110° oder von 80° bis 100° zur Spiegelfläche oder zu einer Lichteinfallsfläche der dritten optischen Einheit der zweiten Bildstabilisierungseinheit ausgerichtet ist, wobei die Bereichsgrenzen in den vorgenannten Bereichen eingeschlossen sind.

Bei einer weiteren Ausführungsform des erfindungsgemäßen optischen Systems ist es zusätzlich oder alternativ vorgesehen, dass das erfindungsgemäße optische System eines der folgenden Merkmale aufweist:
- in der zweiten Bildebene ist eine zweite Bilderfassungseinheit angeordnet;
- in der zweiten Bildebene ist eine zweite Bilderfassungseinheit angeordnet, die insbesondere als ein Bildsensor, insbesondere ein Bildsensor auf Halbleiterbasis ausgebildet ist;
- das optische System weist mindestens ein zweites Okular auf, wobei von dem zweiten Objektiv in Richtung der zweiten Bildebene gesehen zunächst die zweite Bildebene und dann das zweite Okular angeordnet sind. Die vorgenannte Ausführungsform weist somit vom zweiten Objektiv aus in Richtung der zweiten Bildebene gesehen die folgende Reihenfolge der einzelnen Einheiten auf: das zweite Objektiv - die zweite Bildstabilisierungseinheit - die zweite Bildebene - das zweite Okular. Bei einer weiteren Ausführungsform ist es vorgesehen, dass die zweite Bildebene des zweiten Objektivs und die zweite Bildebene des zweiten Okulars zusammenfallen.

Bei einer weiteren Ausführungsform des erfindungsgemäßen optischen Systems ist es zusätzlich oder alternativ vorgesehen, dass das optische System ein zweites Gehäuse aufweist, wobei das zweite Objektiv, die zweite Bildstabilisierungseinheit und die zweite Bildebene in diesem zweiten Gehäuse angeordnet sind. Zusätzlich oder alternativ ist es bei einer weiteren Ausführungsform des erfindungsgemäßen optischen Systems vorgesehen, dass das zweite Okular in dem zweiten Gehäuse angeordnet ist.

Bei einer wiederum weiteren Ausführungsform des erfindungsgemäßen optischen Systems ist es zusätzlich oder alternativ vorgesehen, dass die zweite Bildstabilisierungseinheit als ein zweites Umkehrsystem ausgebildet ist. Insbesondere ist es vorgesehen, dass die zweite Bildstabilisierungseinheit als ein zweites Prismenumkehrsystem oder als ein zweites Linsenumkehrsystem ausgebildet ist. Hinsichtlich der Umkehrsysteme gilt das bereits oben Gesagte.

Bei einer weiteren Ausführungsform des erfindungsgemäßen optischen Systems ist es zusätzlich oder alternativ vorgesehen, dass das optische System eines der folgenden Merkmale aufweist:
- mindestens eine zweite Antriebseinheit zur Bewegung der dritten optischen Einheit und/oder der vierten optischen Einheit der zweiten Bildstabilisierungseinheit;
- mindestens eine zweite Antriebseinheit zur Bewegung der dritten optischen Einheit und/oder der vierten optischen Einheit der zweiten Bildstabilisierungseinheit, wobei die zweite Antriebseinheit mindestens eine zweite Piezokeramik aufweist;
- mindestens eine zweite Antriebseinheit zur Bewegung der dritten optischen Einheit und/oder der vierten optischen Einheit der zweiten Bildstabilisierungseinheit, wobei die zweite Antriebseinheit mindestens einen zweiten Piezoaktor aufweist;

- mindestens eine zweite Antriebseinheit zur Bewegung der dritten optischen Einheit und/oder der vierten optischen Einheit der zweiten Bildstabilisierungseinheit, wobei die zweite Antriebseinheit mindestens einen zweiten Piezo-Biegeaktor aufweist;
- mindestens eine zweite Antriebseinheit zur Bewegung der dritten optischen Einheit und/oder der vierten optischen Einheit der zweiten Bildstabilisierungseinheit, wobei die zweite Antriebseinheit mindestens einen zweiten Piezo-Ultraschallaktor aufweist;
- mindestens eine zweite Antriebseinheit zur Bewegung der dritten optischen Einheit und/oder der vierten optischen Einheit der zweiten Bildstabilisierungseinheit, wobei die zweite Antriebseinheit mindestens einen zweiten Piezo-Wanderwellenaktor aufweist;
- mindestens eine zweite Antriebseinheit zur Bewegung der dritten optischen Einheit und/oder der vierten optischen Einheit der zweiten Bildstabilisierungseinheit, wobei die zweite Antriebseinheit mindestens einen zweiten Motor aufweist. Beispielsweise ist der zweite Motor als Gleichstrom-Motor, als Schrittmotor oder als Schwingspulenmotor ausgebildet;
- mindestens eine zweite Antriebseinheit zur Bewegung der dritten optischen Einheit und/oder der vierten optischen Einheit der zweiten Bildstabilisierungseinheit und mindestens eine zweite Steuer - und/oder Regeleinheit zur Steuerung/Regelung der zweiten Antriebseinheit.

Überlegungen haben ergeben, dass die Ausbildung mindestens einer der vorgenannten Antriebseinheiten als eine Antriebseinheit basierend auf der Piezo-Technik besonders von Vorteil ist. Hierzu wird auf weiter oben verwiesen.

Bei einer noch weiteren Ausführungsform des erfindungsgemäßen optischen Systems ist es zusätzlich oder alternativ vorgesehen, dass das optische System mindestens einen zweiten Bewegungsdetektor zur Ermittlung einer Bewegung des optischen Systems, beispielsweise einer rotatorischen und/oder einer translatorischen Zitterbewegung, aufweist. Der zweite Bewegungsdetektor ist beispielsweise als Drehratensensor, als Gyroskop-Sensor oder als Magnetometer ausgebildet. Es wird explizit darauf hingewiesen, dass die Erfindung auf die Verwendung der vorgenannten Bewegungsdetektoren nicht eingeschränkt ist. Vielmehr kann jeglicher Bewegungsdetektor verwendet werden, der für die Erfindung geeignet ist.

Bei einer Ausführungsform des erfindungsgemäßen optischen Systems ist es zusätzlich oder alternativ vorgesehen, dass die vierte optische Einheit der zweiten Bildstabilisierungseinheit als ein zweites Spiegelsystem ausgebildet ist. Insbesondere ist es vorgesehen, dass die vierte optische Einheit der zweiten Bildstabilisierungseinheit als ein zweites Dachkantprisma ausgebildet ist. Insbesondere ist das vorgenannte zweite Dachkantprisma als ein Bauerfeind-Prisma mit einer Dachkante ausgebildet. Bei einer weiteren Ausführungsform ist es zusätzlich oder alternativ vorgesehen, dass die Dachkante des zweiten Dachkantprismas wie eine Dachkante eines Amici-Prismas ausgebildet ist. Bei einer noch weiteren Ausführungsform ist es zusätzlich oder alternativ vorgesehen, dass in das zweite Dachkantprisma einfallende Lichtstrahlen innerhalb des zweiten Dachkantprismas drei Mal reflektiert werden, nämlich zunächst an einer ersten Fläche der Dachkante des zweiten Dachkantprismas, dann an einer zweiten Fläche der Dachkante des zweiten Dachkantprismas und anschließend an einer dritten Fläche des zweiten Dachkantprismas.

Bei einer weiteren Ausführungsform des erfindungsgemäßen optischen Systems ist es zusätzlich oder alternativ vorgesehen, dass das erste Gehäuse als Tubus ausgebildet ist. Zusätzlich oder alternativ ist es vorgesehen, dass das zweite Gehäuse als Tubus ausgebildet ist.

Die Ausführungsformen des erfindungsgemäßen optischen Systems, die zwei Gehäuse aufweisen, weisen im Grunde zwei optische Teilsysteme auf. So ist in dem ersten Gehäuse ein erstes optisches Teilsystem angeordnet (beispielsweise für eines der beiden Augen eines Benutzers). Hingegen ist in dem zweiten Gehäuse ein zweites optisches Teilsystem angeordnet (beispielsweise für das andere der beiden Augen eines Benutzers).

Bei einer wiederum weiteren Ausführungsform des erfindungsgemäßen optischen Systems ist es zusätzlich oder alternativ vorgesehen, dass das erste Gehäuse mit dem zweiten Gehäuse über mindestens eine Knickbrücke verbunden ist. Die Knickbrücke weist mindestens ein an dem ersten Gehäuse angeordnetes erstes Scharnierteil auf. Ferner weist die Knickbrücke mindestens ein an dem zweiten Gehäuse angeordnetes zweites Scharnierteil auf. Die Knickbrücke ermöglicht die Einstellung des optischen Systems derart, dass das erste Gehäuse und das zweite Gehäuse auf den Augenabstand eines Benutzers eingestellt werden können. Das erste Gehäuse und das zweite Gehäuse werden demnach derart relativ zueinander angeordnet, dass das erste Gehäuse an einem der beiden Augen des Benutzers angeordnet ist und dass das zweite Gehäuse an dem anderen der beiden Augen des Benutzers angeordnet ist. Mit anderen Worten lässt sich das wie folgt ausdrücken. Das erste Okular weist eine erste Okularachse auf, hingegen weist das zweite Okular eine zweite Okularachse auf. Das erste Auge eines Benutzers weist eine erste Augenachse auf, und das zweite Auge eines Benutzers weist eine zweite Augenachse auf. Das erste Gehäuse und das zweite Gehäuse werden demnach derart relativ zueinander angeordnet, dass die erste Okularachse sowie die erste Augenachse fluchten und dass die zweite Okularachse und die zweite Augenachse fluchten. Bei der hier erläuterten Ausführungsform ist es durch die Verwendung einer Knickbrücke nicht notwendig, eine Pupillendistanz mittels rhombischer Prismen einzustellen.

Bei einer Ausführungsform des erfindungsgemäßen optischen Systems ist es zusätzlich oder alternativ vorgesehen, dass das optische System mindestens einen Sensor zur Erkennung eines Knickwinkels der Knickbrücke aufweist. Beispielsweise werden mit der ersten Steuer- und/oder Regeleinheit und/oder der zweiten Steuer- und/oder Regeleinheit auf Basis einer Koordinatentransformation und/oder weiterer mathematischer Verfahren Steuer- und/oder Regelsignale, die für die erste Antriebseinheit gedacht sind, aus einem ersten Koordinatensystem in Steuer- und/oder Regelsignale für die zweite Antriebseinheit in einem zweiten Koordinatensystem umgewandelt. Dies ist insbesondere dann von Vorteil, wenn das erfindungsgemäße optische System nur einen einzelnen Bewegungsdetektor aufweist oder nur einen einzelnen Bewegungsdetektor verwendet.

Wie oben bereits erwähnt, weist bei einer weiteren Ausführungsform des erfindungsgemäßen optischen Systems das optische System eine einzelne Steuerund/oder Regeleinheit zur Steuerung/Regelung der ersten Antriebseinheit zur Bewegung der ersten optischen Einheit und/oder der zweiten optischen Einheit der ersten Bildstabilisierungseinheit und zur Steuerung/Regelung der zweiten Antriebseinheit zur Bewegung der dritten optischen Einheit und/oder der vierten optischen Einheit der zweiten Bildstabilisierungseinheit auf. Diese Ausführungsform sieht somit eine einzelne Steuer- und/oder Regeleinheit für zwei Antriebseinheiten vor, nämlich für die erste Antriebseinheit und für die zweite Antriebseinheit.

Bei einer weiteren Ausführungsform des erfindungsgemäßen optischen Systems ist es zusätzlich oder alternativ vorgesehen, dass in dem ersten Gehäuse der erste Bewegungsdetektor und der zweite Bewegungsdetektor angeordnet sind. Bei einer noch weiteren Ausführungsform des erfindungsgemäßen optischen Systems ist es zusätzlich oder alternativ vorgesehen, dass der erste Bewegungsdetektor und der zweite Bewegungsdetektor in dem zweiten Gehäuse angeordnet sind. Bei den vorgenannten Ausführungsformen detektiert der erste Bewegungsdetektor eine Bewegung in eine erste Richtung und der zweite Bewegungsdetektor eine Bewegung in eine zweite Richtung. Alternativ ist es vorgesehen, dass der erste Bewegungsdetektor in dem ersten Gehäuse angeordnet ist oder dass der zweite Bewegungsdetektor in dem zweiten Gehäuse angeordnet ist. Bei diesen Ausführungsformen detektiert der erste Bewegungsdetektor eine Bewegung sowohl in mindestens eine erste Richtung als auch in mindestens eine zweite Richtung, und der zweite Bewegungsdetektor detektiert eine Bewegung sowohl in mindestens eine erste Richtung als auch in mindestens eine zweite Richtung.

Es ist bei dem erfindungsgemäßen optischen System vorgesehen, dass die erste Bildstabilisierungseinheit als ein Prismenumkehrsystem ausgebildet ist. Es ist bei der erfindungsgemäßen Ausführungsform des optischen Systems vorgesehen, dass die erste optische Einheit der ersten Bildstabilisierungseinheit als ein erstes Prisma und die zweite optische Einheit der ersten Bildstabilisierungseinheit als ein zweites Prisma ausgebildet ist. Das erste Prisma kann mindestens ein Merkmal oder eine Kombination von Merkmalen aufweisen, das/die weiter oben oder weiter unten hinsichtlich der ersten optischen Einheit, insbesondere hinsichtlich des ersten Planspiegels genannt ist/sind. Das zweite Prisma kann mindestens ein Merkmal oder eine Kombination von Merkmalen aufweisen, das/die weiter oben oder weiter unten hinsichtlich der zweiten optischen Einheit genannt ist/sind. Beispielsweise weist das erste Prisma eine Fläche innerhalb des ersten Prismas auf, an welcher Lichtstrahlen durch Totalreflexion oder durch eine Spiegelschicht umgelenkt werden. Es ist bei dem erfindungsgemäßen optischen Systems vorgesehen, dass die erste Bildstabilisierungseinheit als ein Abbe-König-Prismensystem ausgebildet ist. Das zweite Prisma ist als ein Dachkantprisma ausgebildet.

Wie oben bereits erläutert, ist es bei einer weiteren Ausführungsform des erfindungsgemäßen optischen Systems zusätzlich oder alternativ vorgesehen, dass die zweite Bildstabilisierungseinheit als ein Prismenumkehrsystem ausgebildet ist. Beispielsweise ist es bei dieser Ausführungsform des erfindungsgemäßen optischen Systems vorgesehen, dass die dritte optische Einheit der zweiten Bildstabilisierungseinheit als ein drittes Prisma und die vierte optische Einheit der zweiten Bildstabilisierungseinheit als ein viertes Prisma ausgebildet ist. Das dritte Prisma kann mindestens ein Merkmal oder eine Kombination von Merkmalen aufweisen, das/die weiter oben oder weiter unten hinsichtlich der dritten optischen Einheit, insbesondere hinsichtlich des zweiten Planspiegels genannt ist/sind. Das vierte Prisma kann mindestens ein Merkmal oder eine Kombination von Merkmalen aufweisen, das/die weiter oben oder weiter unten hinsichtlich der vierten optischen Einheit genannt ist/sind. Beispielsweise weist das dritte Prisma eine Fläche innerhalb des dritten Prismas auf, an welcher Lichtstrahlen durch Totalreflexion oder durch eine Spiegelschicht umgelenkt werden. Insbesondere ist es bei einer Ausführungsform des erfindungsgemäßen optischen Systems vorgesehen, dass die zweite Bildstabilisierungseinheit als ein Abbe-König-Prismensystem, als ein Schmidt-Pechan-Prismensystem oder als ein Porro-Prismensystem ausgebildet ist. Das vierte Prisma ist beispielsweise als ein Dachkantprisma ausgebildet.

Die Erfindung betrifft auch ein Verfahren zum Betrieb eines optischen Systems. Bei dem Verfahren wird ein Bild stabilisiert. Das optische System weist mindestens eines der weiter oben oder weiter unten genannten Merkmale oder eine Kombination von mindestens zwei der weiter oben oder weiter unten genannten Merkmale auf. Das Verfahren weist die folgenden Schritte auf:
- Erfassen einer Bewegung des optischen Systems mit dem ersten Bewegungsdetektor und/oder dem zweiten Bewegungsdetektor und Erzeugen eines Bewegungssignals;
- Bestimmen mindestens einer der folgenden Soll-Positionen mindestens einer der folgenden Einheiten mit einer Recheneinheit des optischen Systems in Abhängigkeit des Bewegungssignals: (i) einer ersten Soll-Position der ersten optischen Einheit der ersten Bildstabilisierungseinheit, (ii) einer zweiten Soll-Position der zweiten optischen Einheit der ersten Bildstabilisierungseinheit, (iii) einer dritten Soll-Position der dritten optischen Einheit der zweiten Bildstabilisierungseinheit sowie (iv) einer vierten Soll-Position der vierten optischen Einheit der zweiten Bildstabilisierungseinheit. Die Soll-Positionen werden insbesondere in Abhängigkeit verschiedener Vorgaben und gewünschter Betriebsmodi, beispielsweise einer vorgegebenen Stärke der Stabilisation und/oder einer vorgegebenen Verwendung des optischen Systems, beispielsweise bei einer Verwendung in einem sich bewegenden Fortbewegungsmittel, bestimmt;

- Bestimmen mindestens einer der folgenden Ist-Positionen mindestens einer der folgenden Einheiten mit mindestens einem ersten Positionssensor der ersten Antriebseinheit und/oder mit mindestens einem zweiten Positionssensor der zweiten Antriebseinheit: (i) einer ersten Ist-Position der ersten optischen Einheit der ersten Bildstabilisierungseinheit, (ii) einer zweiten Ist-Position der zweiten optischen Einheit der ersten Bildstabilisierungseinheit, (iii) einer dritten Ist-Position der dritten optischen Einheit der zweiten Bildstabilisierungseinheit sowie (iv) einer vierten Ist-Position der vierten optischen Einheit der zweiten Bildstabilisierungseinheit;
- Vergleich der folgenden Positionen unter Verwendung der ersten Steuerund/oder Regeleinheit und/oder der zweiten Steuer- und/oder Regeleinheit: (i) der ersten Ist-Position der ersten optischen Einheit der ersten Bildstabilisierungseinheit mit der ersten Soll-Position der ersten optischen Einheit der ersten Bildstabilisierungseinheit, (ii) der zweiten Ist-Position der zweiten optischen Einheit der ersten Bildstabilisierungseinheit mit der zweiten Soll-Position der zweiten optischen Einheit der ersten Bildstabilisierungseinheit, (iii) der dritten Ist-Position der dritten optischen Einheit der zweiten Bildstabilisierungseinheit mit der dritten Soll-Position der dritten optischen Einheit der zweiten Bildstabilisierungseinheit sowie (iv) der vierten Ist-Position der vierten optischen Einheit der zweiten Bildstabilisierungseinheit mit der vierten Soll-Position der vierten optischen Einheit der zweiten Bildstabilisierungseinheit; sowie
- Ausführen mindestens eines Schritts der folgenden Schritte
   a) wenn die erste Ist-Position der ersten optischen Einheit der ersten Bildstabilisierungseinheit unterschiedlich zur ersten Soll-Position der ersten optischen Einheit der ersten Bildstabilisierungseinheit ist, Ansteuern und/oder Regeln der ersten Antriebseinheit unter Verwendung der ersten Steuer- und/oder Regeleinheit und/oder der zweiten Steuer- und/oder Regeleinheit derart, dass die erste optische Einheit der ersten Bildstabilisierungseinheit durch Drehung um die erste Drehachse insbesondere iterativ in die erste Soll-Position bewegt wird;
   b) wenn die zweite Ist-Position der zweiten optischen Einheit der ersten Bildstabilisierungseinheit unterschiedlich zur zweiten Soll-Position der zweiten optischen Einheit der ersten Bildstabilisierungseinheit ist, Ansteuern und/oder Regeln der ersten Antriebseinheit unter Verwendung der ersten Steuer- und/oder Regeleinheit und/oder der zweiten Steuer- und/oder Regeleinheit derart, dass die zweite optischen Einheit der ersten Bildstabilisierungseinheit durch Drehung um die zweite Drehachse insbesondere iterativ in die zweite Soll-Position bewegt wird;
   c) wenn die dritte Ist-Position der dritten optischen Einheit der zweiten Bildstabilisierungseinheit unterschiedlich zur dritten Soll-Position der dritten optischen Einheit der zweiten Bildstabilisierungseinheit ist, Ansteuern und/oder Regeln der zweiten Antriebseinheit unter Verwendung der ersten Steuer- und/oder Regeleinheit und/oder der zweiten Steuer- und/oder Regeleinheit derart, dass die dritte optische Einheit der zweiten Bildstabilisierungseinheit durch Drehung um die dritte Drehachse insbesondere iterativ in die dritte Soll-Position bewegt wird;
   d) wenn die vierte Ist-Position der vierten optischen Einheit der zweiten Bildstabilisierungseinheit unterschiedlich zur vierten Soll-Position der vierten optischen Einheit der zweiten Bildstabilisierungseinheit ist, Ansteuern und/oder Regeln der zweiten Antriebseinheit unter Verwendung der ersten Steuer- und/oder Regeleinheit und/oder der zweiten Steuer- und/oder Regeleinheit derart, dass die vierte optische Einheit der zweiten Bildstabilisierungseinheit durch Drehung um die vierte Drehachse insbesondere iterativ in die vierte Soll-Position bewegt wird.

Die erste Steuer- und/oder Regeleinheit kann als ein erster PID-Regler ausgebildet sein. Ferner kann die zweite Steuer- und/oder Regeleinheit als ein zweiter PID-Regler ausgebildet sein.

Die Erfindung wird nun anhand von Ausführungsformen mittels Figuren näher beschrieben. Dabei zeigen
- Fig. 1: eine schematische Darstellung eines optisches Systems in Form eines Fernglases mit einer Knickbrücke;
- Fig. 2: eine weitere schematische Darstellung des Fernglases nach Figur 1;
- Fig. 3: eine schematische Darstellung eines zweiten optischen Teilsystems;
- Fig. 4: eine weitere schematische Darstellung des zweiten optischen Teilsystems nach Figur 3;
- Fig. 5: eine schematische Darstellung eines weiteren optischen Systems in Form eines Fernglases;
- Fig. 6: eine schematische Darstellung eines wiederum weiteren optischen Systems in Form eines Fernglases;
- Fig. 7: eine schematische Darstellung eines zweiten optischen Teilsystems des Fernglases nach Figur 6; sowie
- Fig. 8: eine schematische Darstellung eines Ablaufdiagramms einer Ausführungsform des erfindungsgemäßen Verfahrens.

Nachfolgend werden Ausführungsformen der Erfindung erläutert. Eine erste Ausführungsform eines optischen Systems ist ein binokulares Fernglas 1 (nachfolgend nur Fernglas genannt). Es wird aber explizit darauf hingewiesen, dass die Erfindung nicht auf ein binokulares Fernglas eingeschränkt ist. Vielmehr ist die Erfindung für jedes optische System geeignet, beispielsweise auch für ein Fernrohr, wie weiter unten noch näher ausgeführt wird. Beispielsweise ist es vorgesehen, dass die nachfolgend geschilderten Ausführungsformen mindestens eines der weiter oben genannten Merkmale oder eine Kombination von mindestens zwei der weiter oben genannten Merkmale aufweisen.

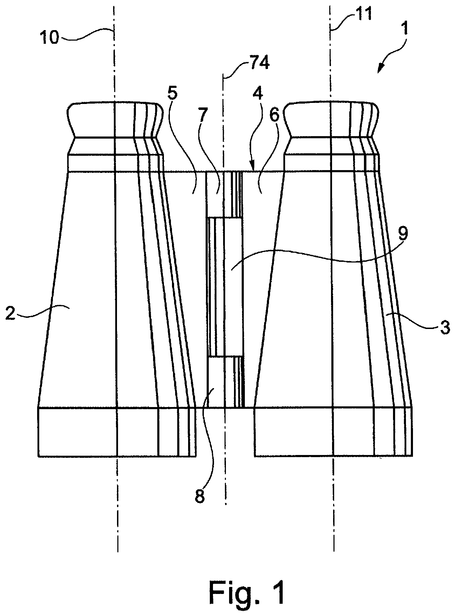

**Figur 1** zeigt eine erste schematische Darstellung des Fernglases 1, welches ein tubusförmiges erstes Gehäuse 2 und ein tubusförmiges zweites Gehäuse 3 aufweist. Durch das erste Gehäuse 2 verläuft eine erste optische Achse 10. Hingegen verläuft durch das zweite Gehäuse 3 eine zweite optische Achse 11. Das erste Gehäuse 2 ist mit dem zweiten Gehäuse 3 über eine Knickbrücke 4 miteinander verbunden. Die Knickbrücke 4 weist ein erstes Scharnierteil 5 auf, welches an dem ersten Gehäuse 2 angeordnet ist. Ferner weist die Knickbrücke 4 ein zweites Scharnierteil 6 auf, welches an dem zweiten Gehäuse 3 angeordnet ist. Das erste Scharnierteil 5 weist ein erstes Aufnahmeteil 7 und ein zweites Aufnahmeteil 8 auf, zwischen denen ein drittes Aufnahmeteil 9 des zweiten Scharnierteils 6 angeordnet ist. Durch das erste Aufnahmeteil 7, das zweite Aufnahmeteil 8 sowie das dritte Aufnahmeteil 9 verläuft ein Achsbolzen (nicht dargestellt), so dass die relative Position des ersten Gehäuses 2 und des zweiten Gehäuses 3 zueinander um eine Gelenkachse 74 eingestellt werden kann. Auf diese Weise ist es möglich, das erste Gehäuse 2 und das zweite Gehäuse 3 auf die Pupillendistanz eines Benutzers einzustellen, so dass zum einen das erste Gehäuse 2 an dem einen der beiden Augen des Benutzers angeordnet ist und so dass zum anderen das zweite Gehäuse 3 an dem anderen der beiden Augen des Benutzers angeordnet ist.

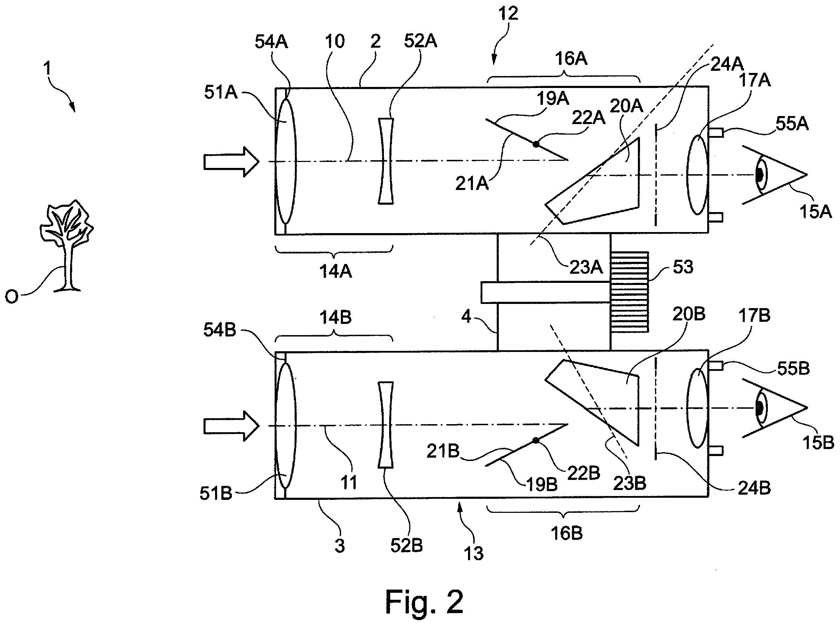

**Figur 2** zeigt eine weitere Darstellung des Fernglases 1. Das erste Gehäuse 2 weist ein erstes optisches Teilsystem 12 auf. Das erste optische Teilsystem 12 ist mit einem ersten Objektiv 14A, mit einer ersten Bildstabilisierungseinheit 16A und einem ersten Okular 17A versehen.

An dem ersten Okular 17A kann ein erstes Auge 15A eines Benutzers zur Beobachtung eines Objekts O angeordnet werden. Die erste optische Achse 10 des ersten optischen Teilsystems 12 wird aufgrund der ersten Bildstabilisierungseinheit 16A lateral etwas versetzt, so dass es zu einer stufigen Ausbildung der ersten optischen Achse 10 kommt.

Das erste Objektiv 14A weist bei dieser Ausführungsform eine erste Fronteinheit 51A und eine erste Fokussiereinheit 52A auf. Weitere Ausführungsformen des ersten Objektivs 14A sehen eine unterschiedliche Anzahl an einzelnen Linsen oder aus Linsen bestehenden Kittgliedern vor. Zum Zwecke einer Fokussierung des durch das Fernglas 1 betrachteten Objekts O kann entweder das erste Okular 17A oder die erste Fokussiereinheit 52A axial entlang der ersten optischen Achse 10 verschoben werden. Bei einer weiteren Ausführungsform wird die erste Fronteinheit 51A oder sogar das vollständige erste Objektiv 14A entlang der ersten optischen Achse 10 verschoben. Bei einer weiteren Ausführungsform werden die erste Fronteinheit 51A und die erste Fokussiereinheit 52A relativ zueinander verschoben.

Die erste Bildstabilisierungseinheit 16A weist eine erste optische Einheit 19A und eine zweite optische Einheit 20A auf. Die erste optische Einheit 19A ist zwischen dem ersten Objektiv 14A und der zweiten optischen Einheit 20A angeordnet. Bei dieser Ausführungsform ist die erste optische Einheit 19A als ein erster Planspiegel ausgebildet, wobei die erste optische Einheit 19A an einer Lichteinfallsseite eine erste Spiegelfläche 21A aufweist. Die zweite optische Einheit 20A ist als ein Dachkantprisma ausgebildet. Beispielsweise weist das Dachkantprisma mindestens eines der weiter oben hinsichtlich des Dachkantprismas genannten Merkmale oder eine Kombination von mindestens zwei der weiter oben hinsichtlich des Dachkantprismas genannten Merkmale auf.

Die erste optische Einheit 19A der ersten Bildstabilisierungseinheit 16A ist um eine erste Drehachse 22A drehbar ausgebildet, wobei die erste Drehachse 22A senkrecht in die Zeichenebene hinein verläuft. Die erste Drehachse 22A ist die einzige Drehachse, um welche sich die erste optische Einheit 19A der ersten Bildstabilisierungseinheit 16A dreht. Demnach ist es bei dieser Ausführungsform vorgesehen, dass die erste optische Einheit 19A sich um keine weitere Drehachse dreht. Die zweite optische Einheit 20A der ersten Bildstabilisierungseinheit 16A ist um eine zweite Drehachse 23A drehbar ausgebildet. Es ist vorgesehen, dass die erste Drehachse 22A und die zweite Drehachse 23A unterschiedliche Achsen sind. Hierauf wird weiter unten noch näher eingegangen. Bei einer weiteren Ausführungsform ist vorgesehen, dass die erste optische Einheit 19A eine einzelne Fläche aufweist, an welcher auf die Fläche einfallende Lichtstrahlen reflektiert werden. Beispielsweise ist es vorgesehen, dass die erste optische Einheit 19A eine einzige Fläche aufweist, an welcher auf die Fläche einfallende Lichtstrahlen reflektiert werden. Mit anderen Worten ausgedrückt, ist es bei dieser weiteren Ausführungsform vorgesehen, dass an der ersten optischen Einheit 19A keine weitere Fläche angeordnet ist, an welcher einfallende Lichtstrahlen reflektiert werden.

Das zweite Gehäuse 3 weist ein zweites optisches Teilsystem 13 auf. Das zweite optische Teilsystem 13 ist mit einem zweiten Objektiv 14B, mit einer zweiten Bildstabilisierungseinheit 16B und mit einem zweiten Okular 17B versehen. An dem zweiten Okular 17B kann ein zweites Auge 15B des Benutzers zur Beobachtung des Objekts O angeordnet werden. Die zweite optische Achse 11 des zweiten optischen Teilsystems 13 wird aufgrund der zweiten Bildstabilisierungseinheit 16B lateral etwas versetzt, so dass es zu einer stufigen Ausbildung der zweiten optischen Achse 11 kommt.

Das zweite Objektiv 14B weist bei dieser Ausführungsform eine zweite Fronteinheit 51B und eine zweite Fokussiereinheit 52B auf. Weitere Ausführungsformen des zweiten Objektivs 14B sehen eine unterschiedliche Anzahl an einzelnen Linsen oder aus Linsen bestehenden Kittgliedern vor. Zum Zwecke einer Fokussierung des durch das Fernglas 1 betrachteten Objekts O kann entweder das zweite Okular 17B oder die zweite Fokussiereinheit 52B axial entlang der zweiten optischen Achse 11 verschoben werden. Bei einer weiteren Ausführungsform wird die zweite Fronteinheit 51B oder sogar das vollständige zweite Objektiv 14B entlang der zweiten optischen Achse 11 verschoben. Bei einer weiteren Ausführungsform werden die zweite Fronteinheit 51B und die zweite Fokussiereinheit 52B relativ zueinander verschoben.

Die zweite Bildstabilisierungseinheit 16B weist eine dritte optische Einheit 19B und eine vierte optische Einheit 20B auf. Die dritte optische Einheit 19B ist zwischen dem zweiten Objektiv 14B und der vierten optischen Einheit 20B angeordnet. Bei dieser Ausführungsform ist die dritte optische Einheit 19B als ein zweiter Planspiegel ausgebildet, wobei die dritte optische Einheit 19B an einer Lichteinfallsseite eine zweite Spiegelfläche 21B aufweist. Die vierte optische Einheit 20B ist als ein Dachkantprisma ausgebildet. Beispielsweise weist das Dachkantprisma mindestens eines der weiter oben hinsichtlich des Dachkantprismas genannten Merkmale oder eine Kombination von mindestens zwei der weiter oben hinsichtlich des Dachkantprismas genannten Merkmale auf.

Die dritte optische Einheit 19B der zweiten Bildstabilisierungseinheit 16B ist um eine dritte Drehachse 22B drehbar ausgebildet, wobei die dritte Drehachse 22B senkrecht in die Zeichenebene hinein verläuft. Die dritte Drehachse 22B ist die einzige Drehachse, um welche sich die dritte optische Einheit 19B der zweiten Bildstabilisierungseinheit 16B dreht. Demnach ist es bei dieser Ausführungsform vorgesehen, dass die dritte optische Einheit 19B sich um keine weitere Drehachse dreht. Die vierte optische Einheit 20B der zweiten Bildstabilisierungseinheit 16B ist um eine vierte Drehachse 23B drehbar ausgebildet. Bei dieser Ausführungsform ist es vorgesehen, dass die dritte Drehachse 22B und die vierte Drehachse 23B unterschiedliche Achsen sind. Hierauf wird weiter unten noch näher eingegangen.

Bei einer weiteren Ausführungsform ist vorgesehen, dass die dritte optische Einheit 19B eine einzelne Fläche aufweist, an welcher auf die Fläche einfallende Lichtstrahlen reflektiert werden. Beispielsweise ist es vorgesehen, dass die dritte optische Einheit 19B eine einzige Fläche aufweist, an welcher auf die Fläche einfallende Lichtstrahlen reflektiert werden. Mit anderen Worten ausgedrückt, ist es bei dieser weiteren Ausführungsform vorgesehen, dass an der dritten optischen Einheit 19B keine weitere Fläche angeordnet ist, an welcher einfallende Lichtstrahlen reflektiert werden.

Bei beiden oben dargestellten optischen Teilsystemen 12, 13 ist die Strahlrichtung der in die optischen Teilsysteme 12, 13 einfallenden Lichtstrahlen wie folgt: Objekt O - Objektiv 14A, 14B - Bildstabilisierungseinheit 16A, 16B - Okular 17A, 17B - Auge 15A, 15B.

Zum Fokussieren ist bei der hier dargestellten Ausführungsform an der Knickbrücke 4 ein Drehknopf 53 angeordnet, mit dem die erste Fokussiereinheit 52A und die zweite Fokussiereinheit 52B gemeinsam entlang der ersten optischen Achse 10 und der zweiten optischen Achse 11 verschoben werden können. Bei einer weiteren Ausführungsform ist es vorgesehen, das erste Objektiv 14A und das zweite Objektiv 14B (oder zumindest Einheiten des ersten Objektivs 14A und des zweiten Objektivs 14B) relativ zueinander zu verstellen.

Sowohl das erste Objektiv 14A als auch das zweite Objektiv 14B erzeugen bei der hier dargestellten Ausführungsform ein reales, relativ zum betrachteten Objekt O auf dem Kopf stehendes Bild in einer dem jeweiligen Objektiv 14A, 14B zugeordneten Bildebene. Die dem ersten Objektiv 14A zugeordnete erste Bildstabilisierungseinheit 16A ist ein erstes Umkehrsystem. Ferner ist die dem zweiten Objektiv 14B zugeordnete zweite Bildstabilisierungseinheit 16B ein zweites Umkehrsystem. Beide vorgenannten Umkehrsysteme werden zur Bildaufrichtung verwendet. Somit wird das auf dem Kopf stehende Bild wieder aufgerichtet und in einer neuen Bildebene, einer ersten Zwischenbildebene 24A im ersten Gehäuse 2 oder einer zweiten Zwischenbildebene 24B im zweiten Gehäuse 3 abgebildet. In der ersten Zwischenbildebene 24A ist beispielsweise eine das Sehfeld scharf begrenzende erste Feldblende angeordnet. Ferner kann beispielsweise in der zweiten Zwischenbildebene 24B eine das Sehfeld scharf begrenzende zweite Feldblende angeordnet sein.

Das erste Okular 17A wird verwendet, um das Bild der ersten Zwischenbildebene 24A in eine beliebige Entfernung, z.B. ins Unendliche oder in eine andere Entfernung, abzubilden. Ferner wird das zweite Okular 17B dazu verwendet, um das Bild der zweiten Zwischenbildebene 24B in eine beliebige Entfernung, z.B. ins Unendliche oder in eine andere Entfernung, abzubilden.

Eine erste Aperturblende 54A des ersten optischen Teilsystems 12 und eine zweite Aperturblende 54B des zweiten optischen Teilsystems 13 können entweder durch eine Fassung eines optischen Elements des entsprechenden optischen Teilsystems 12, 13, in der Regel durch die Fassung der Linsen der ersten Fronteinheit 51A oder der zweiten Fronteinheit 51B, oder durch eine separate Blende gebildet sein. Sie kann in Strahlrichtung durch das entsprechende optische Teilsystem 12 oder 13 in eine Ebene abgebildet werden, die in Strahlrichtung hinter dem entsprechenden Okular 17A oder 17B liegt und typischerweise 5 bis 25 mm Abstand zu diesem hat. Diese Ebene wird Ebene der Austrittspupille genannt.

Zum Schutz des Benutzers vor seitlich einfallendem Licht können an dem ersten Okular 17A eine ausziehbare, ausdrehbare oder umklappbare erste Augenmuschel 55A und an dem zweiten Okular 17B eine ausziehbare, ausdrehbare oder umklappbare zweite Augenmuschel 55B vorgesehen sein.

**Figur 3** zeigt eine schematische Darstellung des zweiten optischen Teilsystems 13, das in dem zweiten Gehäuse 3 angeordnet ist. **Figur 3** beruht auf der Darstellung des zweiten optischen Teilsystems 13 der **Figur 2****.** Gleiche Baueinheiten sind mit gleichen Bezugszeichen versehen. Das in dem ersten Gehäuse 2 angeordnete erste optische Teilsystem 12 weist im Grunde einen identischen Aufbau wie das zweite optische Teilsystem 13 auf. Somit gelten die nachfolgenden Ausführungen hinsichtlich des zweiten optischen Teilsystems 13 entsprechend auch für das erste optische Teilsystem 12. Wenn das erfindungsgemäße optische System beispielsweise als ein Monokular, als ein Fernrohr oder als ein Spektiv ausgebildet ist, so weist das optische System im Grunde denselben Aufbau auf, der in **Figur 3** gezeigt ist. Demnach gelten die nachfolgenden Ausführungen auch für diese optischen Systeme.

Wie oben bereits erwähnt, ist die dritte optische Einheit 19B der zweiten Bildstabilisierungseinheit 16B um die dritte Drehachse 22B drehbar ausgebildet, wobei die dritte Drehachse 22B senkrecht in die Zeichenebene hinein verläuft. Die vierte optische Einheit 20B der zweiten Bildstabilisierungseinheit 16B ist um die vierte Drehachse 23B drehbar ausgebildet. Bei dieser Ausführungsform ist es vorgesehen, dass die dritte Drehachse 22B und die vierte Drehachse 23B unterschiedliche Achsen sind. Beispielsweise ist die vierte Drehachse 23B hinsichtlich der zweiten optischen Achse 11 ausgerichtet, wie bereits weiter oben erläutert.

Ein zweites System gebildet aus der dritten optischen Einheit 19B und einer zweiten Halterung für die dritte optische Einheit 19B der zweiten Bildstabilisierungseinheit 16B weist einen zweiten Schwerpunkt auf, wobei die dritte Drehachse 22B durch den zweiten Schwerpunkt verläuft. Der zweite Schwerpunkt ist der Masseschwerpunkt des zweiten Systems. Dies weist den Vorteil auf, dass die dritte optische Einheit 19B der zweiten Bildstabilisierungseinheit 16B im Grunde im Gleichgewicht gelagert ist. Somit ist ein geringeres Drehmoment als im Stand der Technik erforderlich, um die dritte optische Einheit 19B der zweiten Bildstabilisierungseinheit 16B zu drehen, so dass mechanische Anforderungen an eine Antriebseinheit zum Bewegen der dritten optischen Einheit 19B gering sind und dass bei Einsatz einer elektrisch betriebenen Antriebseinheit im Vergleich zum Stand der Technik ein geringerer Stromverbrauch erzielt wird.

Ferner ist es bei der hier erläuterten Ausführungsform der Erfindung vorgesehen, dass die zweite optische Achse 11 die zweite Spiegelfläche 21B der dritten optischen Einheit 19B der zweiten Bildstabilisierungseinheit 16B an einem zweiten Schnittpunkt schneidet, wobei die dritte Drehachse 22B durch den zweiten Schnittpunkt verläuft. Ein Auftreffpunkt der zweiten optischen Achse 11 liegt ein wenig oberhalb der Mitte der zweiten Spiegelfläche 21B. Die zweite Spiegelfläche 21B der dritten optischen Einheit 19B der zweiten Bildstabilisierungseinheit 16B kann einen zweiten Mittelpunkt aufweisen, wobei die dritte Drehachse 22B durch den zweiten Mittelpunkt verläuft. Die beiden zuletzt genannten Ausführungsformen werden beispielsweise gewählt, wenn eine besonders gute Abbildung mit dem optischen System, beispielsweise dem Fernglas 1, erzielt werden soll.

Bei einer Ausführungsform der Erfindung ist es vorgesehen, dass die dritte Drehachse 22B, um die sich die dritte optische Einheit 19B dreht, eine zweite Ebene schneidet. Ferner ist es bei dieser Ausführungsform vorgesehen, dass die vierte Drehachse 23B, um die sich die vierte optische Einheit 20B dreht, in der vorgenannten zweiten Ebene liegt. Beispielsweise ist es vorgesehen, dass die dritte Drehachse 22B entlang der x-Achse des oben beschriebenen Koordinatensystems ausgerichtet ist. Die vierte Drehachse 23B liegt dann in der Ebene, welche durch die y-Achse und die z-Achse aufgespannt wird. Dies ist die yz-Ebene. Beispielsweise erfolgt bei einer Drehung der dritten optischen Einheit 19B um die dritte Drehachse 22B in Form der x-Achse eine Ablenkung von Lichtstrahlen im zweiten optischen Teilsystem 13 derart, dass eine Verschiebung des Bildes in der Bildebene entlang der y-Achse bewirkt wird. Hierdurch kann einer Verschiebung des mit dem zweiten optischen Teilsystem 13 erzeugten Bildes entlang der y-Achse entgegengewirkt werden. Es erfolgt demnach eine Stabilisierung des Bildes entlang der y-Achse. Durch Drehung der vierten optischen Einheit 20B um die vierte Drehachse 23B, welche in der vorgenannten Ebene liegt, kommt es zu einer Ablenkung von Lichtstrahlen im zweiten optischen Teilsystem 13 derart, dass eine Verschiebung des mit dem optischen Teilsystem 13 erzeugten Bildes in der Bildebene entlang der x-Achse bewirkt wird. Es erfolgt demnach eine Stabilisierung des Bildes entlang der x-Achse.

Eine Drehung der vierten optischen Einheit 20B der zweiten Bildstabilisierungseinheit 16B um eine beliebige Achse, beispielsweise eine beliebige Achse in der yz-Ebene, kann neben der oben genannten gewollten Verschiebung des Bildes entlang der x-Achse auch eine ungewollte Drehung des mit dem zweiten optischen Teilsystem 13 erzeugten Bildes bewirken. Um diese ungewollte Drehung zu vermeiden, ist es bei einer Ausführungsform vorgesehen, dass in einem unstabilisierten Zustand des zweiten optischen Teilsystems 13 die vierte Drehachse 23B senkrecht zur zweiten Spiegelfläche 21B der dritten optischen Einheit 19B der zweiten Bildstabilisierungseinheit 16B ausgerichtet ist. Der unstabilisierte Zustand liegt dann vor, wenn keine Bildstabilisierung erfolgt. Bei dieser Ausführungsform kommt es ausschließlich zu einer Verschiebung des Bildes entlang der x-Achse. Demnach kommt es zu keiner störenden Drehung des Bildes.

Bei einer weiteren Ausführungsform ist es zusätzlich oder alternativ vorgesehen, dass in der Bildebene des zweiten optischen Teilsystems 13 eine zweite Bilderfassungseinheit angeordnet ist, die beispielsweise als ein Bildsensor auf Halbleiterbasis ausgebildet ist.

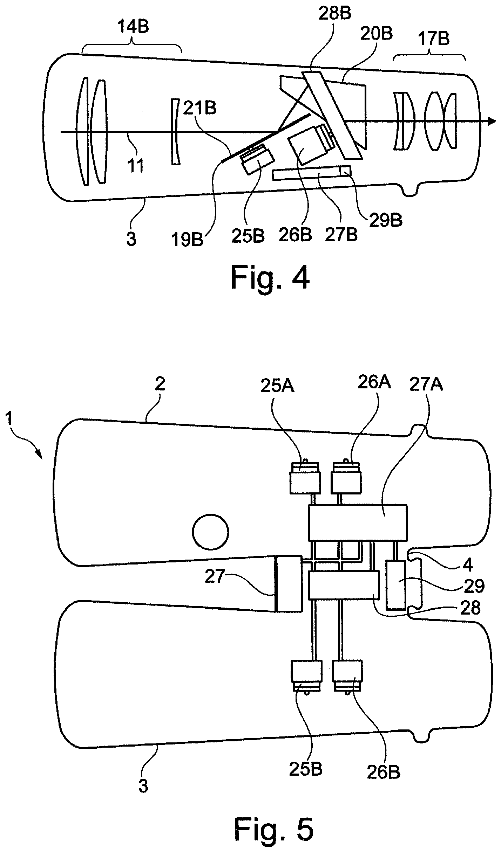

Um die dritte optische Einheit 19B um die dritte Drehachse 22B zu drehen und um die vierte optische Einheit 20B um die vierte Drehachse 23B zu drehen, werden bei der Erfindung Antriebseinheiten verwendet, die in der **Figur 4** dargestellt sind. **Figur 4** beruht auf **Figur 3****.** Gleiche Baueinheiten sind mit gleichen Bezugszeichen versehen.

Im zweiten Gehäuse 3 ist eine zweite Spiegelantriebseinheit 25B angeordnet, welche eine Kraft zur Drehung der dritten optischen Einheit 19B um die dritte Drehachse 22B bereitstellt. Ferner ist im zweiten Gehäuse 3 eine zweite Prismenantriebseinheit 26B angeordnet, welche eine Kraft zur Drehung der vierten optischen Einheit 20B um die vierte Drehachse 23B bereitstellt. Die zweite Prismenantriebseinheit 26B wirkt hierzu mit einer Halterung 28B der vierten optischen Einheit 20B zusammen. Die zweite Spiegelantriebseinheit 25B und/oder die zweite Prismenantriebseinheit 26B ist/sind beispielsweise als Piezokeramik, als Piezoaktor, als Piezo-Biegeaktor, als Piezo-Ultraschallaktor, als Piezo-Wanderwellenaktor, als Gleichstrom-Motor, als Schrittmotor oder als Schwingspulenmotor ausgebildet. Es wird explizit darauf hingewiesen, dass die Erfindung auf die Verwendung der vorgenannten Antriebseinheiten nicht eingeschränkt ist. Vielmehr kann für die Erfindung jegliche Antriebseinheit verwendet werden, die für die Erfindung geeignet ist.

Überlegungen haben ergeben, dass die Ausbildung mindestens einer der vorgenannten Antriebseinheiten als eine Antriebseinheit basierend auf der Piezo-Technik besonders von Vorteil ist. Hierzu wird auf weiter oben verwiesen.

Im zweiten Gehäuse 3 ist ferner eine zweite Steuer- und/oder Regeleinheit 27B angeordnet, welche Steuer- und/oder Regelsignale an die zweite Spiegelantriebseinheit 25B und die zweite Prismenantriebseinheit 26B sendet. Ferner ist im zweiten Gehäuse 3 ein zweiter Bewegungsdetektor 29B angeordnet. Der zweite Bewegungsdetektor 29B dient zur Ermittlung einer Bewegung des optischen Systems, beispielsweise einer rotatorischen und/oder einer translatorischen Zitterbewegung. Der zweite Bewegungsdetektor 29B ist beispielsweise als Drehratensensor, als Gyroskop-Sensor oder als Magnetometer ausgebildet. Es wird explizit darauf hingewiesen, dass die Erfindung auf die Verwendung der vorgenannten Bewegungsdetektoren nicht eingeschränkt ist. Vielmehr kann jeglicher Bewegungsdetektor verwendet werden, der für die Erfindung geeignet ist.

**Figur 5** zeigt eine weitere Ausführungsform des Fernglases 1. Bei dieser Ausführungsform des Fernglases 1 sind im zweiten Gehäuse 3 die zweite Spiegelantriebseinheit 25B und die zweite Prismenantriebseinheit 26B angeordnet. Ferner sind im ersten Gehäuse 2 eine erste Spiegelantriebseinheit 25A und eine erste Prismenantriebseinheit 26A angeordnet, welche in dem ersten optischen Teilsystem 12 dieselben Funktionen und Wirkungen wie die zweite Spiegelantriebseinheit 25B und die zweite Prismenantriebseinheit 26B in dem zweiten optischen Teilsystem 13 aufweisen. An der Knickbrücke 4 ist ein Bewegungsdetektor 27 angeordnet. Ferner ist an der Knickbrücke 4 eine Spannungsversorgungseinheit 28 angeordnet. Die Spannungsversorgungseinheit 28 ist beispielsweise als Batterie oder Akkumulator ausgebildet. Darüber hinaus ist an der Knickbrücke 4 ein Knickbrückensensor 29 angeordnet. Im ersten Gehäuse 2 ist ferner eine erste Steuer- und/oder Regeleinheit 27A angeordnet, welche mit der ersten Spiegelantriebseinheit 25A, der ersten Prismenantriebseinheit 26A, der zweiten Spiegelantriebseinheit 25B, der zweiten Prismenantriebseinheit 26B, dem Bewegungsdetektor 27, der Spannungsversorgungseinheit 28 und dem Knickbrückensensor 29 leitungstechnisch verbunden ist.

Der Knickbrückensensor 29 dient der Erkennung eines Knickwinkels der Knickbrücke 4. Mit der ersten Steuer- und/oder Regeleinheit 27A werden auf Basis einer Koordinatentransformation und/oder weiterer mathematischer Verfahren Steuerund/oder Regelsignale, die für die erste Spiegelantriebseinheit 25A und für die erste Prismenantriebseinheit 26A auf Basis von mit dem Bewegungsdetektor 27 detektierten Zitterbewegungen und oder Drehbewegungen berechnet sind, aus einem ersten Koordinatensystem in Steuer- und/oder Regelsignale für die zweite Spiegelantriebseinheit 25B und für die zweite Prismenantriebseinheit 26B in einem zweiten Koordinatensystem umgewandelt.

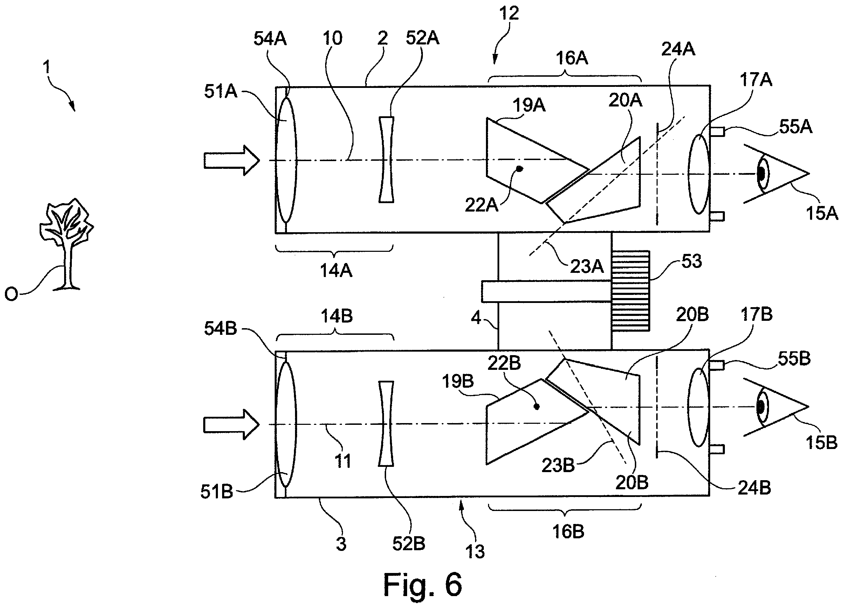

**Figur 6** zeigt eine weitere Ausführungsform der Erfindung. Die Ausführungsform der **Figur 6** beruht auf der Ausführungsform der **Figur 2**. Gleiche Baueinheiten sind mit gleichen Bezugszeichen versehen. Es wird daher auf die obigen Ausführungen verwiesen, die auch hier gelten.

In **Figur 6** ist die erste Bildstabilisierungseinheit 16A als ein Prismenumkehrsystem ausgebildet. Die erste Bildstabilisierungseinheit 16A weist die erste optische Einheit 19A und die zweite optische Einheit 20A auf. Die erste optische Einheit 19A ist als ein erstes Prisma ausgebildet. Die zweite optische Einheit 20A ist als ein zweites Prisma ausgebildet. Die erste Bildstabilisierungseinheit 16A ist als ein Abbe-König-Prismensystem ausgebildet.

Die erste optische Einheit 19A der ersten Bildstabilisierungseinheit 16A gemäß der **Figur 6** ist um eine erste Drehachse 22A drehbar ausgebildet, wobei die erste Drehachse 22A senkrecht in die Zeichenebene hinein verläuft. Die erste Drehachse 22A ist die einzige Drehachse, um welche sich die erste optische Einheit 19A der ersten Bildstabilisierungseinheit 16A dreht. Demnach ist es bei dieser Ausführungsform vorgesehen, dass die erste optische Einheit 19A sich um keine weitere Drehachse dreht. Die zweite optische Einheit 20A der ersten Bildstabilisierungseinheit 16A ist um eine zweite Drehachse 23A drehbar ausgebildet. Es ist vorgesehen, dass die erste Drehachse 22A und die zweite Drehachse 23A unterschiedliche Achsen sind. Beispielsweise ist die zweite Drehachse 23A hinsichtlich der ersten optischen Achse 10 ausgerichtet, wie bereits weiter oben erläutert.

Die erste optische Einheit 19A gemäß der **Figur 6** kann mindestens ein Merkmal oder eine Kombination von mindestens zwei Merkmalen aufweisen, das/die weiter oben hinsichtlich der ersten optischen Einheit 19A gemäß der **Figur 2** genannt ist/sind. Die zweite optische Einheit 20A gemäß der **Figur 6** kann mindestens ein Merkmal oder eine Kombination von mindestens zwei Merkmalen aufweisen, das/die weiter oben hinsichtlich der zweiten optischen Einheit 20A gemäß der **Figur 2** genannt ist/sind. Beispielsweise weisen die erste optische Einheit 19A und die zweite optische Einheit 20A gemäß der **Figur 6** jeweils eine reflektierende Seite auf, an welcher Lichtstrahlen durch Totalreflexion oder durch eine Spiegelschicht umgelenkt werden.

Bei der in **Figur 6** dargestellten Ausführungsform ist die zweite Bildstabilisierungseinheit 16B als ein Prismenumkehrsystem ausgebildet. Die zweite Bildstabilisierungseinheit 16B weist die dritte optische Einheit 19B und die vierte optische Einheit 20B auf. Die dritte optische Einheit 19B ist als ein drittes Prisma ausgebildet. Die vierte optische Einheit 20B ist als ein viertes Prisma ausgebildet. Die zweite Bildstabilisierungseinheit 16B ist beispielweise als ein Abbe-König-Prismensystem, als ein Schmidt-Pechan-Prismensystem oder als ein Porro-Prismensystem ausgebildet.

Die dritte optische Einheit 19B der zweiten Bildstabilisierungseinheit 16B gemäß der **Figur 6** ist um eine dritte Drehachse 22B drehbar ausgebildet, wobei die dritte Drehachse 22B senkrecht in die Zeichenebene hinein verläuft. Die dritte Drehachse 22B ist die einzige Drehachse, um welche sich die dritte optische Einheit 19B der zweiten Bildstabilisierungseinheit 16B dreht. Demnach ist es bei dieser Ausführungsform vorgesehen, dass die dritte optische Einheit 19B sich um keine weitere Drehachse dreht. Die vierte optische Einheit 20B der zweiten Bildstabilisierungseinheit 16B ist um eine vierte Drehachse 23B drehbar ausgebildet. Bei dieser Ausführungsform ist es vorgesehen, dass die dritte Drehachse 22B und die vierte Drehachse 23B unterschiedliche Achsen sind.

Die dritte optische Einheit 19B gemäß der **Figur 6** kann mindestens ein Merkmal oder eine Kombination von mindestens zwei Merkmalen aufweisen, das/die weiter oben hinsichtlich der dritten optischen Einheit 19B gemäß der **Figur 2** genannt ist/sind. Die vierte optische Einheit 20B gemäß der **Figur 6** kann mindestens ein Merkmal oder eine Kombination von mindestens zwei Merkmalen aufweisen, das/die weiter oben hinsichtlich der vierten optischen Einheit 20B gemäß der

**Figur 2** genannt ist/sind. Beispielsweise weisen die dritte optische Einheit 19B und die vierte optische Einheit 20B gemäß der **Figur 6** jeweils eine reflektierende Seite auf, an welcher Lichtstrahlen durch Totalreflexion oder durch eine Spiegelschicht umgelenkt werden.

Die Ausführungsform der **Figur 6** kann dieselben Antriebseinheiten, Bewegungsdetektoren, Steuer- und/oder Regeleinheiten, denselben Knickbrückensensor und dieselbe Spannungsversorgungseinheit aufweisen, die bereits hinsichtlich der **Figuren 4 und 5** erläutert wurden. Demnach gelten die obigen Ausführungen auch für die Ausführungsform der **Figur 6****.**

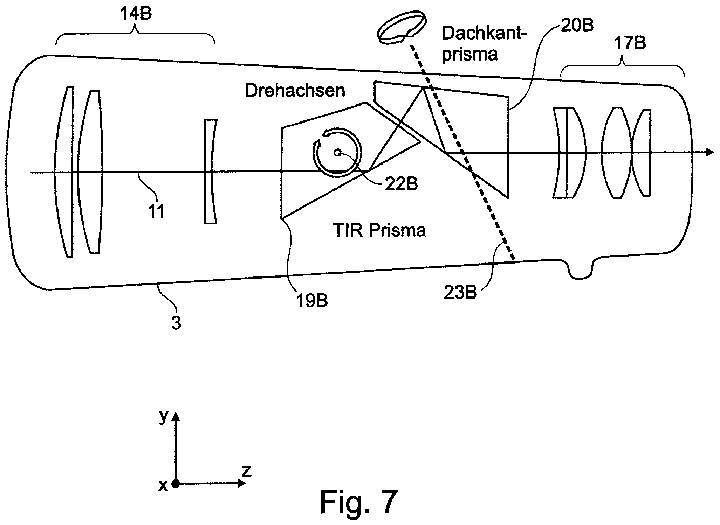

**Figur 7** zeigt eine schematische Darstellung des zweiten optischen Teilsystems 13, das in dem zweiten Gehäuse 3 angeordnet ist. **Figur 7** beruht auf der Darstellung des zweiten optischen Teilsystems 13 der **Figur 6****.** Gleiche Baueinheiten sind mit gleichen Bezugszeichen versehen. Das in dem ersten Gehäuse 2 angeordnete erste optische Teilsystem 12 weist im Grunde einen identischen Aufbau wie das zweite optische Teilsystem 13 auf. Somit gelten die nachfolgenden Ausführungen hinsichtlich des zweiten optischen Teilsystems 13 entsprechend auch für das erste optische Teilsystem 12. Wenn das erfindungsgemäße optische System beispielsweise als ein Monokular, als ein Fernrohr oder als ein Spektiv ausgebildet ist, so weist das optische System im Grunde denselben Aufbau auf, der in **Figur 6** gezeigt ist. Demnach gelten die nachfolgenden Ausführungen auch für diese optischen Systeme.

Wie oben bereits erwähnt, ist die dritte optische Einheit 19B der zweiten Bildstabilisierungseinheit 16B um die dritte Drehachse 22B drehbar ausgebildet, wobei die dritte Drehachse 22B senkrecht in die Zeichenebene hinein verläuft. Die vierte optische Einheit 20B der zweiten Bildstabilisierungseinheit 16B ist um die vierte Drehachse 23B drehbar ausgebildet. Bei dieser Ausführungsform ist es vorgesehen, dass die dritte Drehachse 22B und die vierte Drehachse 23B unterschiedliche Achsen sind.

Ein zweites System gebildet aus der dritten optischen Einheit 19B und einer Halterung für die dritte optische Einheit 19B der zweiten Bildstabilisierungseinheit 16B weist einen zweiten Schwerpunkt auf, wobei die dritte Drehachse 22B durch den zweiten Schwerpunkt verläuft. Der zweite Schwerpunkt ist der Masseschwerpunkt des zweiten Systems. Dies weist den Vorteil auf, dass die dritte optische Einheit 19B der zweiten Bildstabilisierungseinheit 16B im Grunde im Gleichgewicht gelagert ist. Somit ist ein geringeres Drehmoment als im Stand der Technik erforderlich, um die dritte optische Einheit 19B der zweiten Bildstabilisierungseinheit 16B zu drehen, so dass mechanische Anforderungen an eine Antriebseinheit zum Bewegen der dritten optischen Einheit 19B gering sind und dass bei Einsatz einer elektrisch betriebenen Antriebseinheit im Vergleich zum Stand der Technik ein geringerer Stromverbrauch erzielt wird.

Ferner ist es bei der hier erläuterten Ausführungsform der Erfindung vorgesehen, dass die zweite optische Achse 11 eine reflektierende Fläche der dritten optischen Einheit 19B an einem zweiten Schnittpunkt schneidet, wobei die dritte Drehachse 22B durch den zweiten Schnittpunkt verläuft. Ein Auftreffpunkt der zweiten optischen Achse 11 liegt ein wenig oberhalb der Mitte der reflektierenden Fläche. Die reflektierende Fläche der dritten optischen Einheit 19B der zweiten Bildstabilisierungseinheit 16B kann einen zweiten Mittelpunkt aufweisen, wobei die dritte Drehachse 22B durch den zweiten Mittelpunkt verläuft. Die reflektierende Fläche ist beispielsweise eine Fläche innerhalb der dritten optischen Einheit 19B in Form des ersten Prismas, an der einfallende Lichtstrahlen durch Totalreflexion umgelenkt werden. Alternativ hierzu ist die reflektierende Fläche eine Spiegelschicht.

Bei einer Ausführungsform der Erfindung ist es vorgesehen, dass die dritte Drehachse 22B, um die sich die dritte optische Einheit 19B dreht, eine zweite Ebene schneidet. Ferner ist es bei dieser Ausführungsform vorgesehen, dass die vierte Drehachse 23B, um die sich die vierte optische Einheit 20B dreht, in der vorgenannten zweiten Ebene liegt. Beispielsweise ist es vorgesehen, dass die dritte Drehachse 22B entlang der x-Achse des oben beschriebenen Koordinatensystems ausgerichtet ist. Die vierte Drehachse 23B liegt dann in der Ebene, welche durch die y-Achse und die z-Achse aufgespannt wird. Dies ist die yz-Ebene. Beispielsweise erfolgt bei einer Drehung der dritten optischen Einheit 19B um die dritte Drehachse 22B in Form der x-Achse eine Ablenkung von Lichtstrahlen im zweiten optischen Teilsystem 13 derart, dass eine Verschiebung des Bildes in der Bildebene entlang der y-Achse bewirkt wird. Hierdurch kann einer Verschiebung des mit dem zweiten optischen Teilsystem 13 erzeugten Bildes entlang der y-Achse entgegengewirkt werden. Es erfolgt demnach eine Stabilisierung des Bildes entlang der y-Achse. Durch Drehung der vierten optischen Einheit 20B um die vierte Drehachse 23B, welche in der vorgenannten Ebene liegt, kommt es zu einer Ablenkung von Lichtstrahlen im zweiten optischen Teilsystem 13 derart, dass eine Verschiebung des mit dem optischen Teilsystem 13 erzeugten Bildes in der Bildebene entlang der x-Achse bewirkt wird. Es erfolgt demnach eine Stabilisierung des Bildes entlang der x-Achse.

Eine Drehung der vierten optischen Einheit 20B der zweiten Bildstabilisierungseinheit 16B um eine beliebige Achse, beispielsweise eine beliebige Achse in der yz-Ebene, kann neben der oben genannten gewollten Verschiebung des Bildes entlang der x-Achse auch eine ungewollte Drehung des mit dem zweiten optischen Teilsystems 13 erzeugten Bildes bewirken. Um diese ungewollte Drehung zu vermeiden, ist es bei einer Ausführungsform vorgesehen, dass in einem unstabilisierten Zustand des zweiten optischen Teilsystems 13 die vierte Drehachse 23B senkrecht zur reflektierenden Fläche der dritten optischen Einheit 19B der zweiten Bildstabilisierungseinheit 16B ausgerichtet ist. Der unstabilisierte Zustand liegt dann vor, wenn keine Bildstabilisierung erfolgt. Bei dieser Ausführungsform kommt es ausschließlich zu einer Verschiebung des Bildes entlang der x-Achse. Demnach kommt es zu keiner störenden Drehung des Bildes.

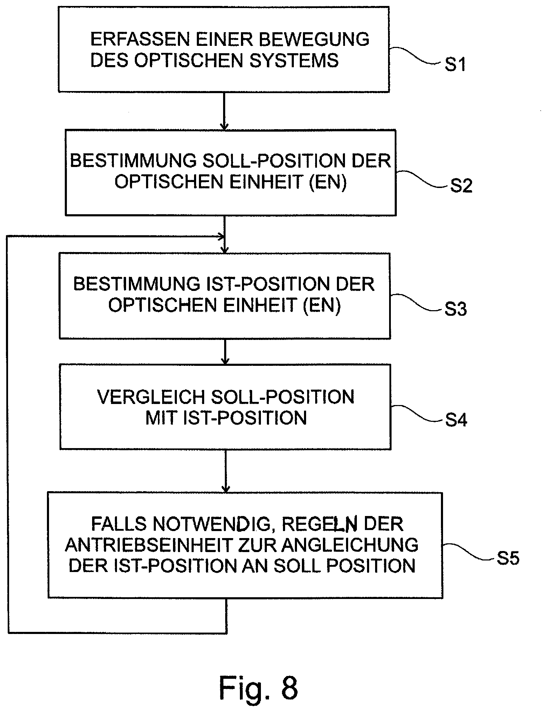

In **Figur 8** ist ein Ablaufdiagramm einer Ausführungsform des erfindungsgemäßen Verfahrens zum Betrieb des Fernglases 1 gemäß der **Figur 5** dargestellt. Bei dem Verfahren wird ein mit dem Fernglas 1 erzeugtes Bild stabilisiert. In einem Verfahrensschritt S1 wird eine Bewegung des Fernglases 1 mit dem Bewegungsdetektor 27 erfasst und ein Bewegungssignal erzeugt. In einem Verfahrensschritt S2 erfolgt ein Bestimmen mindestens einer der folgenden Soll-Positionen mindestens einer der folgenden Einheiten mit einer Recheneinheit des Fernglases 1 in Abhängigkeit des Bewegungssignals: (i) einer ersten Soll-Position der ersten optischen Einheit 19A der ersten Bildstabilisierungseinheit 16A, (ii) einer zweiten Soll-Position der zweiten optischen Einheit 20A der ersten Bildstabilisierungseinheit 16A, (iii) einer dritten Soll-Position der dritten optischen Einheit 19B der zweiten Bildstabilisierungseinheit 16B sowie (iv) einer vierten Soll-Position der vierten optischen Einheit 20B der zweiten Bildstabilisierungseinheit 16B. Die Soll-Positionen werden insbesondere in Abhängigkeit einer vorgegebenen Stärke der Stabilisation und/oder einer vorgegebenen Verwendung des Fernglases 1, beispielsweise bei einer Verwendung in einem sich bewegenden Fortbewegungsmittel, bestimmt. In einem Verfahrensschritt S3 erfolgt ein Bestimmen mindestens einer der folgenden Ist-Positionen mindestens einer der folgenden Einheiten mit mindestens einem ersten Positionssensor der ersten Spiegelantriebseinheit 25A, der ersten Prismenantriebseinheit 26A, der zweiten Spiegelantriebseinheit 25B sowie der zweiten Prismenantriebseinheit 26B: (i) einer ersten Ist-Position der ersten optischen Einheit 19A der ersten Bildstabilisierungseinheit 16A, (ii) einer zweiten Ist-Position der zweiten optischen Einheit 20A der ersten Bildstabilisierungseinheit 16A, (iii) einer dritten Ist-Position der dritten optischen Einheit 19B der zweiten Bildstabilisierungseinheit 16B sowie (iv) einer vierten Ist-Position der vierten optischen Einheit 20B der zweiten Bildstabilisierungseinheit 16B. In einem Verfahrensschritt S4 erfolgt ein Vergleich der folgenden Positionen unter Verwendung der ersten Steuer- und/oder Regeleinheit 27A: (i) der ersten Ist-Position der ersten optischen Einheit 19A der ersten Bildstabilisierungseinheit 16A mit der ersten Soll-Position der ersten optischen Einheit 19A der ersten Bildstabilisierungseinheit 16A, (ii) der zweiten Ist-Position der zweiten optischen Einheit 20A der ersten Bildstabilisierungseinheit 16A mit der zweiten Soll-Position der zweiten optischen Einheit 20A der ersten Bildstabilisierungseinheit 16A, (iii) der dritten Ist-Position der dritten optischen Einheit 19B der zweiten Bildstabilisierungseinheit 16B mit der dritten Soll-Position der dritten optischen Einheit 19B der zweiten Bildstabilisierungseinheit 16B sowie (iv) der vierten Ist-Position der vierten optischen Einheit 20B der zweiten Bildstabilisierungseinheit 16B mit der vierten Soll-Position der vierten optischen Einheit 20B der zweiten Bildstabilisierungseinheit 16B. Im Verfahrensschritt S5 wird mindestens ein Schritt der folgenden Schritte ausgeführt:
(i) wenn die erste Ist-Position der ersten optischen Einheit 19A der ersten Bildstabilisierungseinheit 16A unterschiedlich zur ersten Soll-Position der ersten optischen Einheit 19A der ersten Bildstabilisierungseinheit 16A ist, Regeln der ersten Spiegelantriebseinheit 25A unter Verwendung der ersten Steuerund/oder Regeleinheit 27A derart, dass die erste optische Einheit 19A der ersten Bildstabilisierungseinheit 16A durch Drehung um die erste Drehachse 22A an die erste Soll-Position angeglichen wird;
(ii) wenn die zweite Ist-Position der zweiten optischen Einheit 20A der ersten Bildstabilisierungseinheit 16A unterschiedlich zur zweiten Soll-Position der zweiten optischen Einheit 20A der ersten Bildstabilisierungseinheit 16A ist, Regeln der ersten Prismenantriebseinheit 26A unter Verwendung der ersten Steuer- und/oder Regeleinheit 27A derart, dass die zweite optische Einheit 20A der ersten Bildstabilisierungseinheit 16A durch Drehung um die zweite Drehachse 23A an die zweite Soll-Position angeglichen wird;
(iii) wenn die dritte Ist-Position der dritten optischen Einheit 19B der zweiten Bildstabilisierungseinheit 16B unterschiedlich zur dritten Soll-Position der dritten optischen Einheit 19B der zweiten Bildstabilisierungseinheit 16B ist, Regeln der zweiten Spiegelantriebseinheit 25B unter Verwendung der ersten Steuer- und/oder Regeleinheit 27A derart, dass die dritte optische Einheit 19B der zweiten Bildstabilisierungseinheit 16B durch Drehung um die dritte Drehachse 22B an die dritte Soll-Position angeglichen wird;
(iv) wenn die vierte Ist-Position der vierten optischen Einheit 20B der zweiten Bildstabilisierungseinheit 16B unterschiedlich zur vierten Soll-Position der vierten optischen Einheit 20B der zweiten Bildstabilisierungseinheit 16B ist, Regeln der zweiten Prismenantriebseinheit 26B unter Verwendung der ersten Steuer- und/oder Regeleinheit 27A derart, dass die vierte optische Einheit 20B der zweiten Bildstabilisierungseinheit 16B durch Drehung um die vierte Drehachse 23B an die vierte Soll-Position angeglichen wird.

Im Anschluss an den Verfahrensschritt S5 werden nochmals die Verfahrensschritte S3 bis S5 durchlaufen, bis im Verfahrensschritt S4 festgestellt wird, dass eine jeweilige Soll-Position der entsprechenden Ist-Position entspricht oder hinreichend genau entspricht, also beispielsweise bis die erste Ist-Position der ersten optischen Einheit 19A der ersten Bildstabilisierungseinheit 16A der ersten Soll-Position der ersten optischen Einheit 19A der ersten Bildstabilisierungseinheit 16A entspricht oder hinreichend genau entspricht.

Bei einer weiteren Erfassung einer weiteren Bewegung des Fernglases 1 wird das Verfahren ausgehend vom Verfahrensschritt S1 erneut durchlaufen.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 1: Fernglas
- 2: erstes Gehäuse
- 3: zweites Gehäuse
- 4: Knickbrücke
- 5: erstes Scharnierteil
- 6: zweites Scharnierteil
- 7: erstes Aufnahmeteil
- 8: zweites Aufnahmeteil
- 9: drittes Aufnahmeteil
- 10: erste optische Achse
- 11: zweite optische Achse
- 12: erstes optisches Teilsystem
- 13: zweites optisches Teilsystem
- 14A: erstes Objektiv
- 14B: zweites Objektiv
- 15A: erstes Auge
- 15B: zweites Auge
- 16A: erste Bildstabilisierungseinheit
- 16B: zweite Bildstabilisierungseinheit
- 17A: erstes Okular
- 17B: zweites Okular

- 19A: erste optische Einheit
- 19B: dritte optische Einheit
- 20A: zweite optische Einheit
- 20B: vierte optische Einheit
- 21A: erste Spiegelfläche
- 21B: zweite Spiegelfläche
- 22A: erste Drehachse
- 22B: dritte Drehachse
- 23A: zweite Drehachse
- 23B: vierte Drehachse
- 24A: erste Zwischenbildebene mit Feldblende
- 24B: zweite Zwischenbildebene mit Feldblende
- 25A: erste Spiegelantriebseinheit
- 25B: zweite Spiegelantriebseinheit
- 26A: erste Prismenantriebseinheit
- 26B: zweite Prismenantriebseinheit
- 27: Bewegungsdetektor
- 27A: erste Steuer- und/oder Regeleinheit
- 27B: zweite Steuer- und/oder Regeleinheit
- 28: Spannungsversorgungseinheit
- 28B: Halterung
- 29: Knickbrückensensor
- 29B: zweiter Bewegungsdetektor

- 51A: erste Fronteinheit
- 51B: zweite Fronteinheit
- 52A: erste Fokussiereinheit
- 52B: zweite Fokussiereinheit
- 53: Drehknopf
- 54A: erste Aperturblende
- 54B: zweite Aperturblende
- 55A: erste Augenmuschel
- 55B: zweite Augenmuschel

- 74: Gelenkachse

- S1 bis S5: Verfahrensschritte
- O: Objekt

## Patentansprüche

1. Optisches System (1) zur Abbildung eines Objekts (O), mit
- mindestens einem ersten Objektiv (14A, 14B),
- mindestens einer ersten Bildstabilisierungseinheit (16A, 16B), und mit
- mindestens einer ersten Bildebene (24A, 24B),
wobei
- von dem ersten Objektiv (14A, 14B) in Richtung der ersten Bildebene (24A, 24B) gesehen zunächst das erste Objektiv (14A, 14B), dann die erste Bildstabilisierungseinheit (16A, 16B) und dann die erste Bildebene (24A, 24B) entlang einer ersten optischen Achse (10, 11) angeordnet sind,
- die erste Bildstabilisierungseinheit (16A, 16B) mindestens eine erste optische Einheit (19A, 19B) und mindestens eine zweite optische Einheit (20A, 20B) aufweist, und wobei
- die zweite optische Einheit (20A, 20B) der ersten Bildstabilisierungseinheit (16A, 16B) eine optische Dachkanteinheit ist,
**dadurch gekennzeichnet, dass**
- die erste optische Einheit (19A, 19B) der ersten Bildstabilisierungseinheit (16A, 16B) um eine erste Drehachse (22A, 22B) drehbar ausgebildet ist,
- die zweite optische Einheit (20A, 20B) der ersten Bildstabilisierungseinheit (16A, 16B) um eine zweite Drehachse (23A, 23B) drehbar ausgebildet ist,
- die erste Drehachse (22A, 22B) und die zweite Drehachse (23A, 23B) unterschiedliche Achsen sind,
- die zweite optische Einheit (20A, 20B) der ersten Bildstabilisierungseinheit (16A, 16B) als ein erstes Dachkantprisma ausgebildet ist, und dass
- die erste Bildstabilisierungseinheit (16A, 16B) als ein Abbe-König-Prismensystem ausgebildet ist.

2. Optisches System (1) nach Anspruch 1, **dadurch gekennzeichnet, dass** das optische System (1) eines der folgenden Merkmale aufweist:
- die erste optische Einheit (19A, 19B) der ersten Bildstabilisierungseinheit (16A, 16B) ist zwischen dem ersten Objektiv (14A, 14B) und der zweiten optischen Einheit (20A, 20B) der ersten Bildstabilisierungseinheit (16A, 16B) angeordnet;
- die zweite optische Einheit (20A, 20B) der ersten Bildstabilisierungseinheit (16A, 16B) ist zwischen dem ersten Objektiv (14A, 14B) und der ersten optischen Einheit (19A, 19B) der ersten Bildstabilisierungseinheit (16A, 16B) angeordnet.

3. Optisches System (1) nach Anspruch 1 oder 2, **dadurch gekennzeichnet, dass** das optische System (1) mindestens eines der folgenden Merkmale aufweist:
(i) mindestens ein erstes System gebildet aus der ersten optische Einheit (19A, 19B) der ersten Bildstabilisierungseinheit (16A, 16B) sowie einer ersten Halterung für die erste optische Einheit (19A, 19B) weist einen ersten Schwerpunkt auf, wobei die erste Drehachse (22A, 22B) durch den ersten Schwerpunkt verläuft;
(ii) die erste Drehachse (22A, 22B) schneidet eine erste Ebene (yz-Ebene), und die zweite Drehachse (23A, 23B) liegt in der ersten Ebene (yz-Ebene);
(iii) in einem unstabilisierten Zustand des optischen Systems (1) ist die zweite Drehachse (23A, 23B) senkrecht zu einer Lichteinfallsfläche (21A, 21B) der ersten optischen Einheit (19A, 19B) ausgerichtet.

4. Optisches System (1) nach einem der vorangehenden Ansprüche, **dadurch gekennzeichnet, dass** das optische System (1) eines der folgenden Merkmale aufweist:
(i) eine erste Bilderfassungseinheit (15A, 15B, 17A, 17B) ist in der ersten Bildebene (24A, 24B) angeordnet;
(ii) eine erste Bilderfassungseinheit ist in der ersten Bildebene (24A, 24B) angeordnet, wobei die erste Bilderfassungseinheit als ein Bildsensor ausgebildet ist;
(iii) das optische System (1) weist mindestens ein erstes Okular (17A, 17B) auf, wobei von dem ersten Objektiv (14A, 14B) in Richtung der ersten Bildebene (24A, 24B) gesehen zunächst die erste Bildebene (24A, 24B) und dann das erste Okular (17A, 17B) angeordnet sind.

5. Optisches System (1) nach einem der vorangehenden Ansprüche, **dadurch gekennzeichnet, dass** das optische System (1) eines der folgenden Merkmale umfasst:
(i) ein erstes Gehäuse (2, 3), wobei das erste Objektiv (14A, 14B), die erste Bildstabilisierungseinheit (16A, 16B) und die erste Bildebene (24A, 24B) in dem ersten Gehäuse (2, 3) angeordnet sind;
(ii) ein erstes Gehäuse (2, 3), wobei das erste Objektiv (14A, 14B), die erste Bildstabilisierungseinheit (16A, 16B) und die erste Bildebene (24A, 24B) in dem ersten Gehäuse (2, 3) angeordnet sind, wobei das erste Okular (17A, 17B) in dem ersten Gehäuse (2, 3) angeordnet ist.

6. Optisches System (1) nach einem der vorangehenden Ansprüche, **dadurch gekennzeichnet, dass** das optische System (1) eines der folgenden Merkmale aufweist:
(i) die erste Bildstabilisierungseinheit (16A, 16B) ist als ein erstes Umkehrsystem ausgebildet;
(ii) die erste Bildstabilisierungseinheit (16A, 16B) ist als ein erstes Prismenumkehrsystem ausgebildet.

7. Optisches System (1) nach einem der vorangehenden Ansprüche, **dadurch gekennzeichnet, dass** das optische System (1) eines der folgenden Merkmale aufweist:
(i) mindestens eine erste Antriebseinheit (25A, 25B, 26A, 26B) zur Bewegung der ersten optischen Einheit (19A, 19B) und/oder der zweiten optischen Einheit (20A, 20B) der ersten Bildstabilisierungseinheit (16A, 16B);
(ii) mindestens eine erste Antriebseinheit (25A, 25B, 26A, 26B) zur Bewegung der ersten optischen Einheit (19A, 19B) und/oder der zweiten optischen Einheit (20A, 20B) der ersten Bildstabilisierungseinheit (16A, 16B), wobei die erste Antriebseinheit (25A, 25B, 26A, 26B) mindestens eine erste Piezokeramik aufweist;
(iii) mindestens eine erste Antriebseinheit (25A, 25B, 26A, 26B) zur Bewegung der ersten optischen Einheit (19A, 19B) und/oder der zweiten optischen Einheit (20A, 20B) der ersten Bildstabilisierungseinheit (16A, 16B), wobei die erste Antriebseinheit (25A, 25B, 26A, 26B) mindestens einen ersten Piezoaktor aufweist;
(iv) mindestens eine erste Antriebseinheit (25A, 25B, 26A, 26B) zur Bewegung der ersten optischen Einheit (19A, 19B) und/oder der zweiten optischen Einheit (20A, 20B) der ersten Bildstabilisierungseinheit (16A, 16B), wobei die erste Antriebseinheit (25A, 25B, 26A, 26B) mindestens einen ersten Motor aufweist;
(v) mindestens eine erste Antriebseinheit (25A, 25B, 26A, 26B) zur Bewegung der ersten optischen Einheit (19A, 19B) und/oder der zweiten optischen Einheit (20A, 20B) der ersten Bildstabilisierungseinheit (16A, 16B) sowie mindestens eine erste Steuer- und/oder Regeleinheit (27A, 27B) zur Steuerung und/oder Regelung der ersten Antriebseinheit (25A, 25B, 26A, 26B).

8. Optisches System (1) nach einem der vorangehenden Ansprüche, **dadurch gekennzeichnet, dass** das optische System (1) mindestens einen ersten Bewegungsdetektor (27, 29B) zur Ermittlung einer Bewegung des optischen Systems (1) aufweist.

9. Optisches System (1) nach einem der vorangehenden Ansprüche, **dadurch gekennzeichnet, dass**
- das optische System (1) mindestens ein zweites Objektiv (14B), mindestens eine zweite Bildstabilisierungseinheit (16B) und mindestens eine zweite Bildebene (24B) aufweist,
- von dem zweiten Objektiv (14B) in Richtung der zweiten Bildebene (24B) gesehen zunächst das zweite Objektiv (14B), dann die zweite Bildstabilisierungseinheit (16B) und dann die zweite Bildebene (24B) entlang einer zweiten optischen Achse (11) angeordnet sind,
- die zweite Bildstabilisierungseinheit (16B) mindestens eine dritte optische Einheit (19B) und mindestens eine vierte optische Einheit (20B) aufweist,
- die dritte optische Einheit (19B) der zweiten Bildstabilisierungseinheit (16B) um eine dritte Drehachse (22B) drehbar ausgebildet ist,
- die vierte optische Einheit (20B) der zweiten Bildstabilisierungseinheit (16B) um eine vierte Drehachse (23B) drehbar ausgebildet ist, und dass
- die vierte optische Einheit (20B) der zweiten Bildstabilisierungseinheit (16B) eine optische Dachkanteinheit ist.

10. Optisches System (1) nach Anspruch 9, **dadurch gekennzeichnet, dass** das optische System (1) eines der folgenden Merkmale aufweist:
- die dritte optische Einheit (19B) der zweiten Bildstabilisierungseinheit (16B) ist zwischen dem zweiten Objektiv (14B) und der vierten optischen Einheit (20B) der zweiten Bildstabilisierungseinheit (16B) angeordnet;
- die vierte optische Einheit (20B) der zweiten Bildstabilisierungseinheit (16B) ist zwischen dem zweiten Objektiv (14B) und der dritten optischen Einheit (19B) der zweiten Bildstabilisierungseinheit (16B) angeordnet.

11. Optisches System (1) nach Anspruch 9 oder 10, **dadurch gekennzeichnet, dass** das optische System (1) eines der folgenden Merkmale umfasst:
(i) die dritte optische Einheit (19B) der zweiten Bildstabilisierungseinheit (16B) weist mindestens einen zweiten Spiegel, mindestens einen zweiten Planspiegel und/oder mindestens ein zweites Prisma auf;
(ii) die dritte optische Einheit (19B) der zweiten Bildstabilisierungseinheit (16B) ist als ein zweiter Planspiegel ausgebildet, wobei der zweite Planspiegel eine zweite Spiegelfläche (21B) aufweist.

12. Optisches System (1) nach einem der Ansprüche 9 bis 11, **dadurch gekennzeichnet, dass** das optische System (1) mindestens eines der folgenden Merkmale aufweist:
(i) mindestens ein zweites System gebildet aus der dritten optischen Einheit (19B) der zweiten Bildstabilisierungseinheit (16B) sowie einer zweiten Halterung für die dritte optische Einheit (19B) weist einen zweiten Schwerpunkt auf, wobei die dritte Drehachse (22B) durch den zweiten Schwerpunkt verläuft;
(ii) die zweite optische Achse (11) schneidet eine zweite Lichteinfallsfläche (21B) der dritten optischen Einheit (19B) der zweiten Bildstabilisierungseinheit (16B) an einem zweiten Schnittpunkt, wobei die dritte Drehachse (22B) durch den zweiten Schnittpunkt verläuft;
(iii) die dritte Drehachse (22B) schneidet eine zweite Ebene (yz-Ebene), und die vierte Drehachse (23B) liegt in der zweiten Ebene (yz-Ebene).

13. Optisches System (1) nach einem der Ansprüche 9 bis 12, **dadurch gekennzeichnet, dass** das optische System (1) eines der folgenden Merkmale aufweist:
(i) in der zweiten Bildebene (24B) ist eine zweite Bilderfassungseinheit (15B, 17B) angeordnet;
(ii) in der zweiten Bildebene (24B) ist eine zweite Bilderfassungseinheit angeordnet, die als ein Bildsensor ausgebildet ist;
(iii) das optische System (1) weist mindestens ein zweites Okular (17B) auf, wobei von dem zweiten Objektiv (14B) in Richtung der zweiten Bildebene (24B) gesehen zunächst die zweite Bildebene (24B) und dann das zweite Okular (17B) angeordnet sind.

14. Optisches System (1) nach einem der Ansprüche 9 bis 13, **dadurch gekennzeichnet, dass** das optische System (1) eines der folgenden Merkmale aufweist:
(i) ein zweites Gehäuse (3), wobei das zweite Objektiv (14B), die zweite Bildstabilisierungseinheit (16B) und die zweite Bildebene (24B) in dem zweiten Gehäuse (3) angeordnet sind;
(ii) ein zweites Gehäuse (3), wobei das zweite Objektiv (14B), die zweite Bildstabilisierungseinheit (16B) und die zweite Bildebene (24B) in dem zweiten Gehäuse (3) angeordnet sind, wobei das zweite Okular (17B) in dem zweiten Gehäuse (3) angeordnet ist.

15. Optisches System (1) nach einem der Ansprüche 9 bis 14, **dadurch gekennzeichnet, dass** das optische System (1) eines der folgenden Merkmale aufweist:
(i) die zweite Bildstabilisierungseinheit (16B) ist als ein zweites Umkehrsystem ausgebildet;
(ii) die zweite Bildstabilisierungseinheit (16B) ist als ein zweites Prismenumkehrsystem ausgebildet.

16. Optisches System (1) nach einem der Ansprüche 9 bis 15, **dadurch gekennzeichnet, dass** das optische System (1) eines der folgenden Merkmale aufweist:
(i) mindestens eine zweite Antriebseinheit (25B, 26B) zur Bewegung der dritten optischen Einheit (19B) und/oder der vierten optischen Einheit (20B) der zweiten Bildstabilisierungseinheit (16B);
(ii) mindestens eine zweite Antriebseinheit (25B, 26B) zur Bewegung der dritten optischen Einheit (19B) und/oder der vierten optischen Einheit (20B) der zweiten Bildstabilisierungseinheit (16B), wobei die zweite Antriebseinheit (25B, 26B) mindestens eine zweite Piezokeramik aufweist;
(iii) mindestens eine zweite Antriebseinheit (25B, 26B) zur Bewegung der dritten optischen Einheit (19B) und/oder der vierten optischen Einheit (20B) der zweiten Bildstabilisierungseinheit (16B), wobei die zweite Antriebseinheit (25B, 26B) mindestens einen zweiten Piezoaktor aufweist;
(iv) mindestens eine zweite Antriebseinheit (25B, 26B) zur Bewegung der dritten optischen Einheit (19B) und/oder der vierten optischen Einheit (20B) der zweiten Bildstabilisierungseinheit (16B), wobei die zweite Antriebseinheit (25B, 26B) mindestens einen zweiten Motor aufweist;
(v) mindestens eine zweite Antriebseinheit (25B, 26B) zur Bewegung der dritten optischen Einheit (19B) und/oder der vierten optischen Einheit (20B) der zweiten Bildstabilisierungseinheit (16B) sowie mindestens eine zweite Steuer- und/oder Regeleinheit (27B).

17. Optisches System (1) nach einem der Ansprüche 9 bis 16, **dadurch gekennzeichnet, dass** das optische System (1) eines der folgenden Merkmale aufweist:
(i) mindestens einen zweiten Bewegungsdetektor (27, 29B) zur Ermittlung einer Bewegung des optischen Systems (1);
(ii) die vierte optische Einheit (20B) der zweiten Bildstabilisierungseinheit (16B) ist als ein zweites Spiegelsystem ausgebildet;
(iii) die vierte optische Einheit (20B) der zweiten Bildstabilisierungseinheit (16B) ist als ein zweites Dachkantprisma ausgebildet.

18. Optisches System (1) nach einem der vorangehenden Ansprüche, aber stets in Verbindung mit Anspruch 5 und Anspruch 14, **dadurch gekennzeichnet, dass**
- das erste Gehäuse (2) mit dem zweiten Gehäuse (3) über mindestens eine Knickbrücke (4) verbunden ist,
- die Knickbrücke (4) mindestens ein an dem ersten Gehäuse (2) angeordnetes erstes Scharnierteil (5) aufweist, und dass
- die Knickbrücke (4) mindestens ein an dem zweiten Gehäuse (3) angeordnetes zweites Scharnierteil (6) aufweist.

19. Verfahren zum Betrieb eines optischen Systems (1) nach einem der vorangehenden Ansprüche, wobei eine Bildstabilisierung erfolgt, wobei das Verfahren **gekennzeichnet ist durch** die folgenden Schritte:
- Erfassen einer Bewegung des optischen Systems (1) mit dem ersten Bewegungsdetektor (27, 29B) und/oder dem zweiten Bewegungsdetektor (27, 29B) und Erzeugen eines Bewegungssignals;
- Bestimmen mindestens einer der folgenden Soll-Positionen mindestens einer der folgenden Einheiten mit einer Recheneinheit des optischen Systems (1) in Abhängigkeit des Bewegungssignals: (i) einer ersten Soll-Position der ersten optischen Einheit (19A) der ersten Bildstabilisierungseinheit (16A), (ii) einer zweiten Soll-Position der zweiten optischen Einheit (20A) der ersten Bildstabilisierungseinheit (16A), (iii) einer dritten Soll-Position der dritten optischen Einheit (19B) der zweiten Bildstabilisierungseinheit (16B), (iv) einer vierten Soll-Position der vierten optischen Einheit (20B) der zweiten Bildstabilisierungseinheit (16B);
- Bestimmen mindestens einer der folgenden Ist-Positionen mindestens einer der folgenden Einheiten mit mindestens einem ersten Positionssensor der ersten Antriebseinheit (25A, 26A) und/oder mit mindestens einem zweiten Positionssensor der zweiten Antriebseinheit (25B, 26B): (i) einer ersten Ist-Position der ersten optischen Einheit (19A) der ersten Bildstabilisierungseinheit (16A), (ii) einer zweiten Ist-Position der zweiten optischen Einheit (20A) der ersten Bildstabilisierungseinheit (16A), (iii) einer dritten Ist-Position der dritten optischen Einheit (19B) der zweiten Bildstabilisierungseinheit (16B), (iv) einer vierten Ist-Position der vierten optischen Einheit (20B) der zweiten Bildstabilisierungseinheit (16B);
- Vergleich der folgenden Positionen unter Verwendung der ersten Steuer- und/oder Regeleinheit (27A, 27B) und/oder der zweiten Steuer- und/oder Regeleinheit (27A, 27B): (i) der ersten Ist-Position der ersten optischen Einheit (19A) der ersten Bildstabilisierungseinheit (16A) mit der ersten Soll-Position der ersten optischen Einheit (19A) der ersten Bildstabilisierungseinheit (16A), (ii) der zweiten Ist-Position der zweiten optischen Einheit (20A) der ersten Bildstabilisierungseinheit (16A) mit der zweiten Soll-Position der zweiten optischen Einheit (20A) der ersten Bildstabilisierungseinheit (16A), (iii) der dritten Ist-Position der dritten optischen Einheit (19B) der zweiten Bildstabilisierungseinheit (16B) mit der dritten Soll-Position der dritten optischen Einheit (19B) der zweiten Bildstabilisierungseinheit (16B), (iv) der vierten Ist-Position der vierten optischen Einheit (20B) der zweiten Bildstabilisierungseinheit (16B) mit der vierten Soll-Position der vierten optischen Einheit (20B) der zweiten Bildstabilisierungseinheit (16B);
- Ausführen mindestens eines der folgenden Schritte:
a) wenn die erste Ist-Position der ersten optischen Einheit (19A) der ersten Bildstabilisierungseinheit (16A) unterschiedlich zur ersten Soll-Position der ersten optischen Einheit (19A) der ersten Bildstabilisierungseinheit (16A) ist, Ansteuern und/oder Regeln der ersten Antriebseinheit (25A) unter Verwendung der ersten Steuer- und/oder Regeleinheit (27A, 27B) und/oder der zweiten Steuer- und/oder Regeleinheit (27A, 27B) derart, dass die erste optische Einheit (19A) der ersten Bildstabilisierungseinheit (16A) durch Drehung um die erste Drehachse (22A) insbesondere iterativ in die erste Soll-Position bewegt wird;
b) wenn die zweite Ist-Position der zweiten optischen Einheit (20A) der ersten Bildstabilisierungseinheit (16A) unterschiedlich zur zweiten Soll-Position der zweiten optischen Einheit (20A) der ersten Bildstabilisierungseinheit (16A) ist, Ansteuern und/oder Regeln der ersten Antriebseinheit (26A) unter Verwendung der ersten Steuer- und/oder Regeleinheit (27A, 27B) und/oder der zweiten Steuer- und/oder Regeleinheit (27A, 27B) derart, dass die zweite optischen Einheit (20A) der ersten Bildstabilisierungseinheit (16A) durch Drehung um die zweite Drehachse (23A) insbesondere iterativ in die zweite Soll-Position bewegt wird;
c) wenn die dritte Ist-Position der dritten optischen Einheit (19B) der zweiten Bildstabilisierungseinheit (16B) unterschiedlich zur dritten Soll-Position der dritten optischen Einheit (19B) der zweiten Bildstabilisierungseinheit (16B) ist, Ansteuern und/oder Regeln der zweiten Antriebseinheit (25B) unter Verwendung der ersten Steuer- und/oder Regeleinheit (27A, 27B) und/oder der zweiten Steuer- und/oder Regeleinheit (27A, 27B) derart, dass die dritte optische Einheit (19B) der zweiten Bildstabilisierungseinheit (16B) durch Drehung um die dritte Drehachse (22B) insbesondere iterativ in die dritte Soll-Position bewegt wird;
d) wenn die vierte Ist-Position der vierten optischen Einheit (20B) der zweiten Bildstabilisierungseinheit (16B) unterschiedlich zur vierten Soll-Position der vierten optischen Einheit (20B) der zweiten Bildstabilisierungseinheit (16B) ist, Ansteuern und/oder Regeln der zweiten Antriebseinheit (26B) unter Verwendung der ersten Steuer- und/oder Regeleinheit (27A, 27B) und/oder der zweiten Steuer- und/oder Regeleinheit (27A, 27B) derart, dass die vierte optische Einheit (20B) der zweiten Bildstabilisierungseinheit (16B) durch Drehung um die vierte Drehachse (23B) insbesondere iterativ in die vierte Soll-Position bewegt wird.

## Claims

1. Optical system (1) for imaging an object (O), having
- at least one first objective (14A, 14B),
- at least one first image stabilizing unit (16A, 16B), and having
- at least one first image plane (24A, 24B),
wherein
- as seen from the first objective (14A, 14B) in the direction of the first image plane (24A, 24B), the first objective (14A, 14B) is arranged first along a first optical axis (10, 11), followed by the first image stabilizing unit (16A, 16B) and then the first image plane (24A, 24B),
- the first image stabilizing unit (16A, 16B) comprises at least one first optical unit (19A, 19B) and at least one second optical unit (20A, 20B), and wherein
- the second optical unit (20A, 20B) of the first image stabilizing unit (16A, 16B) is an optical roof prism unit,
**characterized in that**
- the first optical unit (19A, 19B) of the first image stabilizing unit (16A, 16B) is embodied so as to be rotatable about a first axis of rotation (22A, 22B),
- the second optical unit (20A, 20B) of the first image stabilizing unit (16A, 16B) is embodied so as to be rotatable about a second axis of rotation (23A, 23B),
- the first axis of rotation (22A, 22B) and the second axis of rotation (23A, 23B) are different axes,
- the second optical unit (20A, 20B) of the first image stabilizing unit (16A, 16B) is embodied as a first roof prism, and **in that**
- the first image stabilizing unit (16A, 16B) is embodied as an Abbe-König prism system.

2. Optical system (1) according to Claim 1, **characterized in that** the optical system (1) has one of the following features:
- the first optical unit (19A, 19B) of the first image stabilizing unit (16A, 16B) is arranged between the first objective (14A, 14B) and the second optical unit (20A, 20B) of the first image stabilizing unit (16A, 16B);
- the second optical unit (20A, 20B) of the first image stabilizing unit (16A, 16B) is arranged between the first objective (14A, 14B) and the first optical unit (19A, 19B) of the first image stabilizing unit (16A, 16B).

3. Optical system (1) according to Claim 1 or 2, **characterized in that** the optical system (1) has at least one of the following features:
(i) at least one first system formed by the first optical unit (19A, 19B) of the first image stabilizing unit (16A, 16B) and a first holder for the first optical unit (19A, 19B) has a first centre of gravity, the first axis of rotation (22A, 22B) running through the first centre of gravity;
(ii) the first axis of rotation (22A, 22B) intersects a first plane (yz-plane), and the second axis of rotation (23A, 23B) is located in the first plane (yz-plane);
(iii) in a non-stabilized state of the optical system (1), the second axis of rotation (23A, 23B) is aligned at right angles to a surface of light incidence (21A, 21B) of the first optical unit (19A, 19B).

4. Optical system (1) according to any of the preceding claims, **characterized in that** the optical system (1) has one of the following features:
(i) a first image capture unit (15A, 15B, 17A, 17B) is arranged in the first image plane (24A, 24B);
(ii) a first image capture unit is arranged in the first image plane (24A, 24B), wherein the first image capture unit is embodied as an image sensor;
(iii) the optical system (1) comprises at least one first eyepiece (17A, 17B), wherein, as seen from the first objective (14A, 14B) in the direction of the first image plane (24A, 24B), the first image plane (24A, 24B) is arranged first and then the first eyepiece (17A, 17B).

5. Optical system (1) according to any of the preceding claims, **characterized in that** the optical system (1) comprises one of the following features:
(i) a first housing (2, 3), wherein the first objective (14A, 14B), the first image stabilizing unit (16A, 16B) and the first image plane (24A, 24B) are arranged in the first housing (2, 3);
(ii) a first housing (2, 3), wherein the first objective (14A, 14B), the first image stabilizing unit (16A, 16B) and the first image plane (24A, 24B) are arranged in the first housing (2, 3), wherein the first eyepiece (17A, 17B) is arranged in the first housing (2, 3).

6. Optical system (1) according to any of the preceding claims, **characterized in that** the optical system (1) has one of the following features:
(i) the first image stabilizing unit (16A, 16B) is embodied as a first erecting system;
(ii) the first image stabilizing unit (16A, 16B) is embodied as a first prism erecting system.

7. Optical system (1) according to any of the preceding claims, **characterized in that** the optical system (1) has one of the following features:
(i) at least one first drive unit (25A, 25B, 26A, 26B) for moving the first optical unit (19A, 19B) and/or the second optical unit (20A, 20B) of the first image stabilizing unit (16A, 16B);
(ii) at least one first drive unit (25A, 25B, 26A, 26B) for moving the first optical unit (19A, 19B) and/or the second optical unit (20A, 20B) of the first image stabilizing unit (16A, 16B), wherein the first drive unit (25A, 25B, 26A, 26B) has at least one first piezoceramic;
(iii) at least one first drive unit (25A, 25B, 26A, 26B) for moving the first optical unit (19A, 19B) and/or the second optical unit (20A, 20B) of the first image stabilizing unit (16A, 16B), wherein the first drive unit (25A, 25B, 26A, 26B) has at least one first piezo actuator;
(iv) at least one first drive unit (25A, 25B, 26A, 26B) for moving the first optical unit (19A, 19B) and/or the second optical unit (20A, 20B) of the first image stabilizing unit (16A, 16B), wherein the first drive unit (25A, 25B, 26A, 26B) has at least one first motor;
(v) at least one first drive unit (25A, 25B, 26A, 26B) for moving the first optical unit (19A, 19B) and/or the second optical unit (20A, 20B) of the first image stabilizing unit (16A, 16B) and also at least one first open-loop and/or closed-loop control unit (27A, 27B) for open-loop and/or closed-loop control of the first drive unit (25A, 25B, 26A, 26B).

8. Optical system (1) according to any of the preceding claims, **characterized in that** the optical system (1) comprises at least one first motion detector (27, 29B) for ascertaining a movement of the optical system (1).

9. Optical system (1) according to any of the preceding claims, **characterized in that**
- the optical system (1) comprises at least one second objective (14B), at least one second image stabilizing unit (16B) and at least one second image plane (24B),
- as seen from the second objective (14B) in the direction of the second image plane (24B), the second objective (14B) is arranged first along a second optical axis (11), followed by the second image stabilizing unit (16B) and then the second image plane (24B),
- the second image stabilizing unit (16B) comprises at least one third optical unit (19B) and at least one fourth optical unit (20B),
- the third optical unit (19B) of the second image stabilizing unit (16B) is embodied so as to be rotatable about a third axis of rotation (22B),
- the fourth optical unit (20B) of the second image stabilizing unit (16B) is embodied so as to be rotatable about a fourth axis of rotation (23B), and **in that**
- the fourth optical unit (20B) of the second image stabilizing unit (16B) is an optical roof prism unit.

10. Optical system (1) according to Claim 9, **characterized in that** the optical system (1) has one of the following features:
- the third optical unit (19B) of the second image stabilizing unit (16B) is arranged between the second objective (14B) and the fourth optical unit (20B) of the second image stabilizing unit (16B) ;
- the fourth optical unit (20B) of the second image stabilizing unit (16B) is arranged between the second objective (14B) and the third optical unit (19B) of the second image stabilizing unit (16B).

11. Optical system (1) according to Claim 9 or 10, **characterized in that** the optical system (1) comprises one of the following features:
(i) the third optical unit (19B) of the second image stabilizing unit (16B) comprises at least one second mirror, at least one second plane mirror and/or at least one second prism;
(ii) the third optical unit (19B) of the second image stabilizing unit (16B) is embodied as a second plane mirror, wherein the second plane mirror has a second mirror surface (21B).

12. Optical system (1) according to any of Claims 9 to 11, **characterized in that** the optical system (1) has at least one of the following features:
(i) at least one second system formed by the third optical unit (19B) of the second image stabilizing unit (16B) and a second holder for the third optical unit (19B) has a second centre of gravity, the third axis of rotation (22B) running through the second centre of gravity;
(ii) the second optical axis (11) intersects a second surface of light incidence (21B) of the third optical unit (19B) of the second image stabilizing unit (16B) at a second point of intersection, the third axis of rotation (22B) running through the second point of intersection;
(iii) the third axis of rotation (22B) intersects a second plane (yz-plane), and the fourth axis of rotation (23B) is located in the second plane (yz-plane).

13. Optical system (1) according to any of Claims 9 to 12, **characterized in that** the optical system (1) has one of the following features:
(i) a second image capture unit (15B, 17B) is arranged in the second image plane (24B);
(ii) a second image capture unit which is embodied as an image sensor is arranged in the second image plane (24B);
(iii) the optical system (1) comprises at least one second eyepiece (17B), wherein, as seen from the second objective (14B) in the direction of the second image plane (24B), the second image plane (24B) is arranged first and then the second eyepiece (17B).

14. Optical system (1) according to any of Claims 9 to 13, **characterized in that** the optical system (1) has one of the following features:
(i) a second housing (3), wherein the second objective (14B), the second image stabilizing unit (16B) and the second image plane (24B) are arranged in the second housing (3);
(ii) a second housing (3), wherein the second objective (14B), the second image stabilizing unit (16B) and the second image plane (24B) are arranged in the second housing (3), wherein the second eyepiece (17B) is arranged in the second housing (3).

15. Optical system (1) according to any of Claims 9 to 14, **characterized in that** the optical system (1) has one of the following features:
(i) the second image stabilizing unit (16B) is embodied as a second erecting system;
(ii) the second image stabilizing unit (16B) is embodied as a second prism erecting system.

16. Optical system (1) according to any of Claims 9 to 15, **characterized in that** the optical system (1) has one of the following features:
(i) at least one second drive unit (25B, 26B) for moving the third optical unit (19B) and/or the fourth optical unit (20B) of the second image stabilizing unit (16B);
(ii) at least one second drive unit (25B, 26B) for moving the third optical unit (19B) and/or the fourth optical unit (20B) of the second image stabilizing unit (16B), wherein the second drive unit (25B, 26B) has at least one second piezoceramic;
(iii) at least one second drive unit (25B, 26B) for moving the third optical unit (19B) and/or the fourth optical unit (20B) of the second image stabilizing unit (16B), wherein the second drive unit (25B, 26B) has at least one second piezo actuator;
(iv) at least one second drive unit (25B, 26B) for moving the third optical unit (19B) and/or the fourth optical unit (20B) of the second image stabilizing unit (16B), wherein the second drive unit (25B, 26B) has at least one second motor;
(v) at least one second drive unit (25B, 26B) for moving the third optical unit (19B) and/or the fourth optical unit (20B) of the second image stabilizing unit (16B) and also at least one second open-loop and/or closed-loop control unit (27B).

17. Optical system (1) according to any of Claims 9 to 16, **characterized in that** the optical system (1) has one of the following features:
(i) at least one second motion detector (27, 29B) for ascertaining a movement of the optical system (1);
(ii) the fourth optical unit (20B) of the second image stabilizing unit (16B) is embodied as a second mirror system;
(iii) the fourth optical unit (20B) of the second image stabilizing unit (16B) is embodied as a second roof prism.

18. Optical system (1) according to any of the preceding claims, but always in conjunction with Claim 5 and Claim 14, **characterized in that**
- the first housing (2) is connected to the second housing (3) by way of at least one folding bridge (4),
- the folding bridge (4) comprises at least one first hinge part (5) arranged on the first housing (2), and **in that**
- the folding bridge (4) comprises at least one second hinge part (6) arranged on the second housing (3).

19. Method for operating an optical system (1) according to any of the preceding claims, wherein image stabilization is implemented, wherein the method **is characterized by** the following steps:
- capturing a movement of the optical system (1) using the first motion detector (27, 29B) and/or the second motion detector (27, 29B) and generating a movement signal;
- determining at least one of the following target positions of at least one of the following units using a computing unit of the optical system (1) on the basis of the movement signal: (i) a first target position of the first optical unit (19A) of the first image stabilizing unit (16A), (ii) a second target position of the second optical unit (20A) of the first image stabilizing unit (16A), (iii) a third target position of the third optical unit (19B) of the second image stabilizing unit (16B), (iv) a fourth target position of the fourth optical unit (20B) of the second image stabilizing unit (16B);
- determining at least one of the following actual positions of at least one of the following units using at least one first position sensor of the first drive unit (25A, 26A) and/or using at least one second position sensor of the second drive unit (25B, 26B): (i) a first actual position of the first optical unit (19A) of the first image stabilizing unit (16A), (ii) a second actual position of the second optical unit (20A) of the first image stabilizing unit (16A), (iii) a third actual position of the third optical unit (19B) of the second image stabilizing unit (16B), (iv) a fourth actual position of the fourth optical unit (20B) of the second image stabilizing unit (16B) ;
- comparing the following positions using the first open-loop and/or closed-loop control unit (27A, 27B) and/or the second open-loop and/or closed-loop control unit (27A, 27B): (i) the first actual position of the first optical unit (19A) of the first image stabilizing unit (16A) with the first target position of the first optical unit (19A) of the first image stabilizing unit (16A), (ii) the second actual position of the second optical unit (20A) of the first image stabilizing unit (16A) with the second target position of the second optical unit (20A) of the first image stabilizing unit (16A), (iii) the third actual position of the third optical unit (19B) of the second image stabilizing unit (16B) with the third target position of the third optical unit (19B) of the second image stabilizing unit (16B), (iv) the fourth actual position of the fourth optical unit (20B) of the second image stabilizing unit (16B) with the fourth target position of the fourth optical unit (20B) of the second image stabilizing unit (16B);
- carrying out at least one of the following steps:
a) if the first actual position of the first optical unit (19A) of the first image stabilizing unit (16A) differs from the first target position of the first optical unit (19A) of the first image stabilizing unit (16A), implementing open-loop and/or closed-loop control of the first drive unit (25A) using the first open-loop and/or closed-loop control unit (27A, 27B) and/or the second open-loop and/or closed-loop control unit (27A, 27B), in such a way that the first optical unit (19A) of the first image stabilizing unit (16A) is moved, in particular moved iteratively, into the first target position by way of a rotation about the first axis of rotation (22A);
b) if the second actual position of the second optical unit (20A) of the first image stabilizing unit (16A) differs from the second target position of the second optical unit (20A) of the first image stabilizing unit (16A), implementing open-loop and/or closed-loop control of the first drive unit (26A) using the first open-loop and/or closed-loop control unit (27A, 27B) and/or the second open-loop and/or closed-loop control unit (27A, 27B), in such a way that the second optical unit (20A) of the first image stabilizing unit (16A) is moved, in particular moved iteratively, into the second target position by way of a rotation about the second axis of rotation (23A);
c) if the third actual position of the third optical unit (19B) of the second image stabilizing unit (16B) differs from the third target position of the third optical unit (19B) of the second image stabilizing unit (16B), implementing open-loop and/or closed-loop control of the second drive unit (25B) using the first open-loop and/or closed-loop control unit (27A, 27B) and/or the second open-loop and/or closed-loop control unit (27A, 27B), in such a way that the third optical unit (19B) of the second image stabilizing unit (16B) is moved, in particular moved iteratively, into the third target position by way of a rotation about the third axis of rotation (22B);
d) if the fourth actual position of the fourth optical unit (20B) of the second image stabilizing unit (16B) differs from the fourth target position of the fourth optical unit (20B) of the second image stabilizing unit (16B), implementing open-loop and/or closed-loop control of the second drive unit (26B) using the first open-loop and/or closed-loop control unit (27A, 27B) and/or the second open-loop and/or closed-loop control unit (27A, 27B), in such a way that the fourth optical unit (20B) of the second image stabilizing unit (16B) is moved, in particular moved iteratively, into the fourth target position by way of a rotation about the fourth axis of rotation (23B).

## Revendications

1. Système optique (1) destiné à reproduire un objet (O), ledit système optique comprenant
- au moins un premier objectif (14A, 14B),
- au moins une première unité de stabilisation d'image (16A, 16B), et
- au moins un premier plan d'image (24A, 24B),
- lorsque l'on regarde en direction du premier plan d'image (24A, 24B) depuis le premier objectif (14A, 14B), le premier objectif (14A, 14B) étant disposé en premier, la première unité de stabilisation d'image (16A, 16B) étant disposée après et le premier plan d'image (24A, 24B) étant disposé encore après le long d'un premier axe optique (10, 11),
- la première unité de stabilisation d'image (16A, 16B) comportant au moins une première unité optique (19A, 19B) et au moins une deuxième unité optique (20A, 20B), et
- la deuxième unité optique (20A, 20B) de la première unité de stabilisation d'image (16A, 16B) étant une unité optique triangulaire,
**caractérisé en ce que**
- la première unité optique (19A, 19B) de la première unité de stabilisation d'image (16A, 16B) est conçue pour pouvoir tourner sur un premier axe de rotation (22A, 22B),
- la deuxième unité optique (20A, 20B) de la première unité de stabilisation d'image (16A, 16B) est conçue pour pouvoir tourner sur un deuxième axe de rotation (23A, 23B),
- le premier axe de rotation (22A, 22B) et le deuxième axe de rotation (23A, 23B) sont des axes différents,
- la deuxième unité optique (20A, 20B) de la première unité de stabilisation d'image (16A, 16B) est conçue comme un premier prisme triangulaire, et **en ce que**
- la première unité de stabilisation d'image (16A, 16B) est conçue comme un système de prismes d'Abbe-König.

2. Système optique (1) selon la revendication 1, **caractérisé en ce que** le système optique (1) présente l'une des caractéristiques suivantes :
- la première unité optique (19A, 19B) de la première unité de stabilisation d'image (16A, 16B) est disposée entre le premier objectif (14A, 14B) et la deuxième unité optique (20A, 20B) de la première unité de stabilisation d'image (16A, 16B) ;
- la deuxième unité optique (20A, 20B) de la première unité de stabilisation d'image (16A, 16B) est disposée entre le premier objectif (14A, 14B) et la première unité optique (19A, 19B) de la première unité de stabilisation d'image (16A, 16B).

3. Système optique (1) selon la revendication 1 ou 2, **caractérisé en ce que** le système optique (1) présente l'une au moins des caractéristiques suivantes :
(i) au moins un premier système formé à partir de la première unité optique (19A, 19B) de la première unité de stabilisation d'image (16A, 16B) et d'un premier support destiné à la première unité optique (19A, 19B) présente un premier centre de gravité, le premier axe de rotation (22A, 22B) passant par le premier centre de gravité ;
(ii) le premier axe de rotation (22A, 22B) coupe un premier plan (plan yz), et le deuxième axe de rotation (23A, 23B) est situé dans le premier plan (plan yz) ;
(iii) dans un état non stabilisé du système optique (1), le deuxième axe de rotation (23A, 23B) est orienté perpendiculairement à une surface d'incidence de lumière (21A, 21B) de la première unité optique (19A, 19B) .

4. Système optique (1) selon l'une des revendications précédentes, **caractérisé en ce que** le système optique (1) présente l'une des caractéristiques suivantes :
(i) une première unité de capture d'image (15A, 15B, 17A, 17B) est disposée dans le premier plan d'image (24A, 24B) ;
(ii) une première unité de capture d'image est disposée dans le premier plan d'image (24A, 24B), la première unité de capture d'image étant conçue comme un capteur d'image :
(iii) le système optique (1) comporte au moins un premier oculaire (17A, 17B), lorsque l'on regarde dans la direction du premier plan d'image (24A, 24B) depuis le premier objectif (14A, 14B), le premier plan d'image (24A, 24B) étant disposé en premier et le premier oculaire (17A, 17B) est disposé après.

5. Système optique (1) selon l'une des revendications précédentes, **caractérisé en ce que** le système optique (1) présente l'une des caractéristiques suivantes :
(i) un premier boîtier (2, 3), le premier objectif (14A, 14B), la première unité de stabilisation d'image (16A, 16B) et le premier plan d'image (24A, 24B) étant disposés dans le premier boîtier (2, 3) ;
(ii) un premier boîtier (2, 3), le premier objectif (14A, 14B), la première unité de stabilisation d'image (16A, 16B) et le premier plan d'image (24A, 24B) étant disposés dans le premier boîtier (2, 3), le premier oculaire (17A, 17B) étant disposé dans le premier boîtier (2, 3).

6. Système optique (1) selon l'une des revendications précédentes, **caractérisé en ce que** le système optique (1) présente l'une des caractéristiques suivantes :
(i) la première unité de stabilisation d'image (16A, 16B) est conçue comme un premier système d'inversion ;
(ii) la première unité de stabilisation d'image (16A, 16B) est conçue comme un premier système d'inversion à prisme.

7. Système optique (1) selon l'une des revendications précédentes, **caractérisé en ce que** le système optique (1) présente l'une des caractéristiques suivantes :
(i) au moins une première unité d'entraînement (25A, 25B, 26A, 26B) destinée à déplacer la première unité optique (19A, 19B) et/ou la deuxième unité optique (20A, 20B) de la première unité de stabilisation d'image (16A, 16B) ;
(ii) au moins une première unité d'entraînement (25A, 25B, 26A, 26B) destinée à déplacer la première unité optique (19A, 19B) et/ou la deuxième unité optique (20A, 20B) de la première unité de stabilisation d'image (16A, 16B), la première unité d'entraînement (25A, 25B, 26A, 26B) comportant au moins une première piézo-céramique ;
(iii) au moins une première unité d'entraînement (25A, 25B, 26A, 26B) destinée à déplacer la première unité optique (19A, 19B) et/ou la deuxième unité optique (20A, 20B) de la première unité de stabilisation d'image (16A, 16B), la première unité d'entraînement (25A, 25B, 26A, 26B) comportant au moins un premier actionneur piézo-électrique ;
(iv) au moins une première unité d'entraînement (25A, 25B, 26A, 26B) destinée à déplacer la première unité optique (19A, 19B) et/ou la deuxième unité optique (20A, 20B) de la première unité de stabilisation d'image (16A, 16B), la première unité d'entraînement (25A, 25B, 26A, 26B) comportant au moins un premier moteur ;
(v) au moins une première unité d'entraînement (25A, 25B, 26A, 26B) destinée à déplacer la première unité optique (19A, 19B) et/ou la deuxième unité optique (20A, 20B) de la première unité de stabilisation d'image (16A, 16B) et au moins une première unité de commande et/ou de régulation (27A, 27B) destinée à commander et/ou réguler la première unité d'entraînement (25A, 25B, 26A, 26B).

8. Système optique (1) selon l'une des revendications précédentes, **caractérisé en ce que** le système optique (1) comporte au moins un premier détecteur de mouvement (27, 29B) destiné à détecter un mouvement du système optique (1).

9. Système optique (1) selon l'une des revendications précédentes, **caractérisé en ce que**
- le système optique (1) comporte au moins un deuxième objectif (14B), au moins une deuxième unité de stabilisation d'image (16B) et au moins un deuxième plan d'image (24B),
- lorsque l'on regarde en direction du deuxième plan d'image (24B) depuis le deuxième objectif (14B), le deuxième objectif (14B) est disposé en premier, la deuxième unité de stabilisation d'image (16B) est disposée après et le deuxième plan d'image (24B) est disposé encore après le long d'un deuxième axe optique (11),
- la deuxième unité de stabilisation d'image (16B) comporte au moins une troisième unité optique (19B) et au moins une quatrième unité optique (20B),
- la troisième unité optique (19B) de la deuxième unité de stabilisation d'image (16B) est conçue pour pouvoir tourner sur un troisième axe de rotation (22B),
- la quatrième unité optique (20B) de la deuxième unité de stabilisation d'image (16B) est conçue pour pouvoir tourner sur un quatrième axe de rotation (23B), et **en ce que**
- la quatrième unité optique (20B) de la deuxième unité de stabilisation d'image (16B) est une unité optique triangulaire.

10. Système optique (1) selon la revendication 9, **caractérisé en ce que** le système optique (1) présente l'une des caractéristiques suivantes :
- la troisième unité optique (19B) de la deuxième unité de stabilisation d'image (16B) est disposée entre le deuxième objectif (14B) et la quatrième unité optique (20B) de la deuxième unité de stabilisation d'image (16B) ;
- la quatrième unité optique (20B) de la deuxième unité de stabilisation d'image (16B) est disposée entre le deuxième objectif (14B) et la troisième unité optique (19B) de la deuxième unité de stabilisation d'image (16B).

11. Système optique (1) selon la revendication 9 ou 10, **caractérisé en ce que** le système optique (1) présente l'une des caractéristiques suivantes :
(i) la troisième unité optique (19B) de la deuxième unité de stabilisation d'image (16B) comporte au moins un deuxième miroir, au moins un deuxième miroir plan et/ou au moins un deuxième prisme ;
(ii) la troisième unité optique (19B) de la deuxième unité de stabilisation d'image (16B) est conçue comme un deuxième miroir plan, le deuxième miroir plan comportant une deuxième surface de miroir (21B).

12. Système optique (1) selon l'une des revendications 9 à 11, **caractérisé en ce que** le système optique (1) présente l'une au moins des caractéristiques suivantes :
(i) au moins un deuxième système formé à partir de la troisième unité optique (19B) de la deuxième unité de stabilisation d'image (16B) et d'un deuxième support destiné à la troisième unité optique (19B) présente un deuxième centre de gravité, le troisième axe de rotation (22B) passant par le deuxième centre de gravité ;
(ii) le deuxième axe optique (11) coupe une deuxième surface d'incidence de lumière (21B) de la troisième unité optique (19B) de la deuxième unité de stabilisation d'image (16B) au niveau d'un deuxième point d'intersection, le troisième axe de rotation (22B) passant par le deuxième point d'intersection ;
(iii) le troisième axe de rotation (22B) coupe un deuxième plan (plan yz), et le quatrième axe de rotation (23B) est situé dans le deuxième plan (plan yz).

13. Système optique (1) selon l'une des revendications 9 à 12, **caractérisé en ce que** le système optique (1) présente l'une des caractéristiques suivantes :
(i) une deuxième unité de capture d'image (15B, 17B) est disposée dans le deuxième plan d'image (24B) ;
(ii) une deuxième unité de capture d'image, qui est conçue comme un capteur d'image, est disposée dans le deuxième plan d'image (24B) ;
(iii) le système optique (1) comporte au moins un deuxième oculaire (17B), lorsque l'on regarde dans la direction du deuxième plan d'image (24B) depuis le deuxième objectif (14B), le deuxième plan d'image (24B) étant disposé en premier et le deuxième oculaire (17B) étant disposé après.

14. Système optique (1) selon l'une des revendications 9 à 13, **caractérisé en ce que** le système optique (1) présente l'une des caractéristiques suivantes :
(i) un deuxième boîtier (3), le deuxième objectif (14B), la deuxième unité de stabilisation d'image (16B) et le deuxième plan d'image (24B) étant disposés dans le deuxième boîtier (3) ;
(ii) un deuxième boîtier (3), le deuxième objectif (14B), la deuxième unité de stabilisation d'image (16B) et le deuxième plan d'image (24B) étant disposés dans le deuxième boîtier (3), le deuxième oculaire (17B) étant disposé dans le deuxième boîtier (3).

15. Système optique (1) selon l'une des revendications 9 à 14, **caractérisé en ce que** le système optique (1) présente l'une des caractéristiques suivantes :
(i) la deuxième unité de stabilisation d'image (16B) est conçue comme un deuxième système d'inversion ;
(ii) la deuxième unité de stabilisation d'image (16B) est conçue comme un deuxième système d'inversion à prisme.

16. Système optique (1) selon l'une des revendications 9 à 15, **caractérisé en ce que** le système optique (1) présente l'une des caractéristiques suivantes :
(i) au moins une deuxième unité d'entraînement (25B, 26B) destinée à déplacer la troisième unité optique (19B) et/ou la quatrième unité optique (20B) de la deuxième unité de stabilisation d'image (16B) ;
(ii) au moins une deuxième unité d'entraînement (25B, 26B) destinée à déplacer la troisième unité optique (19B) et/ou la quatrième unité optique (20B) de la deuxième unité de stabilisation d'image (16B), la deuxième unité d'entraînement (25B, 26B) comportant au moins une deuxième piézo-céramique ;
(iii) au moins une deuxième unité d'entraînement (25B, 26B) destinée à déplacer la troisième unité optique (19B) et/ou la quatrième unité optique (20B) de la deuxième unité de stabilisation d'image (16B), la deuxième unité d'entraînement (25B, 26B) comportant au moins un deuxième actionneur piézo-électrique ;
(iv) au moins une deuxième unité d'entraînement (25B, 26B) destinée à déplacer la troisième unité optique (19B) et/ou la quatrième unité optique (20B) de la deuxième unité de stabilisation d'image (16B), la deuxième unité d'entraînement (25B, 26B) comportant au moins un deuxième moteur ;
(v) au moins une deuxième unité d'entraînement (25B, 26B) destinée à déplacer la troisième unité optique (19B) et/ou la quatrième unité optique (20B) de la deuxième unité de stabilisation d'image (16B) et au moins une deuxième unité de commande et/ou de régulation (27B).

17. Système optique (1) selon l'une des revendications 9 à 16, **caractérisé en ce que** le système optique (1) présente l'une des caractéristiques suivantes :
(i) au moins un deuxième détecteur de mouvement (27, 29B) destiné à détecter le mouvement du système optique (1) ;
(ii) la quatrième unité optique (20B) de la deuxième unité de stabilisation d'image (16B) est conçue comme un deuxième système de miroirs ;
(iii) la quatrième unité optique (20B) de la deuxième unité de stabilisation d'image (16B) est conçue comme un deuxième prisme triangulaire.

18. Système optique (1) selon l'une des revendications précédentes, mais toujours en liaison avec la revendication 5 et la revendication 14, **caractérisé en ce que**
- le premier boîtier (2) est relié au deuxième boîtier (3) par le biais d'au moins un pont articulé (4),
- le pont articulé (4) comporte au moins une première partie de charnière (5) disposée sur le premier boîtier (2), et **en ce que**
- le pont articulé (4) comporte au moins une deuxième partie de charnière (6) disposée sur le deuxième boîtier (3).

19. Procédé de fonctionnement d'un système optique (1) selon l'une des revendications précédentes, une stabilisation d'image étant effectuée, le procédé étant **caractérisé par** les étapes suivantes :
- détecter un mouvement du système optique (1) avec le premier détecteur de mouvement (27, 29B) et/ou le deuxième détecteur de mouvement (27, 29B) et générer un signal de mouvement ;
- déterminer au moins une des positions cibles suivantes d'au moins une des unités suivantes à l'aide d'une unité de calcul du système optique (1) en fonction du signal de mouvement : (i) une première position cible de la première unité optique (19A) de la première unité de stabilisation d'image (16A), (ii) une deuxième position cible de la deuxième unité optique (20A) de la première unité de stabilisation d'image (16A), (iii) une troisième position cible de la troisième unité optique (19B) de la deuxième unité de stabilisation d'image (16B), (iv) une quatrième position cible de la quatrième unité optique (20B) de la deuxième unité de stabilisation d'image (16B) ;
- déterminer au moins une des positions réelles suivantes d'au moins une des unités suivantes à l'aide d'au moins un premier capteur de position de la première unité d'entraînement (25A, 26A) et/ou à l'aide d'au moins un deuxième capteur de position de la deuxième unité d'entraînement (25B, 26B) : (i) une première position réelle de la première unité optique (19A) de la première unité de stabilisation d'image (16A), (ii) une deuxième position réelle de la deuxième unité optique (20A) de la première unité de stabilisation d'image unité optique (16A), (iii) une troisième position réelle de la troisième unité optique (19B) de la deuxième unité de stabilisation d'image (16B), (iv) une quatrième position réelle de la quatrième unité optique (20B) de la deuxième unité de stabilisation d'image unité (16B) ;
- comparer les positions suivantes à l'aide de la première unité de commande et/ou de régulation (27A, 27B) et/ou de la deuxième unité de commande et/ou de régulation (27A, 27B) : (i) la première position réelle de la première unité optique (19A) de la première unité de stabilisation d'image (16A) à la première position cible de la première unité optique (19A) de la première unité de stabilisation d'image (16A), (ii) la deuxième position réelle de la deuxième unité optique (20A) de la première unité de stabilisation d'image (16A) à la deuxième position cible de la deuxième unité optique (20A) de la première unité de stabilisation d'image (16A), (iii) la troisième position réelle de la troisième unité optique (19B) de la deuxième unité de stabilisation d'image (16B) à la troisième position cible de la troisième unité optique (19B) de la deuxième unité de stabilisation d'image (16B), (iv) la quatrième position réelle de la quatrième unité optique (20B) de la deuxième unité de stabilisation d'image (16B) à la quatrième position cible de la quatrième unité optique (20B) de la deuxième unité de stabilisation d'image (16B) ;
- réaliser au moins une des étapes suivantes :
a) si la première position réelle de la première unité optique (19A) de la première unité de stabilisation d'image (16A) est différente de la première position cible de la première unité optique (19A) de la première unité de stabilisation d'image (16A), commander et/ou réguler la première unité d'entraînement (25A) à l'aide de la première unité de commande et/ou de régulation (27A, 27B) et/ou de la deuxième unité de commande et/ou de régulation (27A, 27B) de manière à ce que la première unité optique (19A) de la première unité de stabilisation d'image (16A) soit déplacée, en particulier de manière itérative, jusque dans la première position cible par rotation sur le premier axe de rotation (22A) ;
b) si la deuxième position réelle de la deuxième unité optique (20A) de la première unité de stabilisation d'image (16A) est différente de la deuxième position cible de la deuxième unité optique (20A) de la première unité de stabilisation d'image (16A), commander et/ou réguler la première unité d'entraînement (26A) à l'aide de la première unité de commande et/ou de régulation (27A, 27B) et/ou de la deuxième unité de commande et/ou de régulation (27A, 27B) de manière à ce que la deuxième unité optique (20A) de la première unité de stabilisation d'image (16A) soit déplacée, en particulier de manière itérative, jusque dans la deuxième position cible par rotation sur le deuxième axe de rotation (23A) ;
c) si la troisième position réelle de la troisième unité optique (19B) de la deuxième unité de stabilisation d'image (16B) est différente de la troisième position cible de la troisième unité optique (19B) de la deuxième unité de stabilisation d'image (16B), commander et/ou réguler la deuxième unité d'entraînement (25B) à l'aide de la première unité de commande et/ou de régulation (27A, 27B) et/ou de la deuxième unité de commande et/ou de régulation (27A, 27B) de manière à ce que la troisième unité optique (19B) de la deuxième unité de stabilisation d'image (16B) soit déplacée, en particulier de manière itérative, jusque dans la troisième position cible par rotation sur le troisième axe de rotation (22B) ;
d) si la quatrième position réelle de la quatrième unité optique (20B) de la deuxième unité de stabilisation d'image (16B) est différente de la quatrième position cible de la quatrième unité optique (20B) de la deuxième unité de stabilisation d'image (16B), commander et/ou réguler la deuxième unité d'entraînement (26B) à l'aide de la première unité de commande et/ou de régulation (27A, 27B) et/ou de la deuxième unité de commande et/ou de régulation (27A, 27B) de manière à ce que la quatrième unité optique (20B) de la deuxième unité de stabilisation d'image (16B) soit déplacée, en particulier de manière itérative, jusque dans la quatrième position cible par rotation sur le quatrième axe de rotation (23B).
